(19) Europäisches Patentamt
European Patent Office
Office européen des brevets

(11) **EP 4 358 618 A1**

(12) **EUROPEAN PATENT APPLICATION**
published in accordance with Art. 153(4) EPC

(43) Date of publication:
24.04.2024 Bulletin 2024/17

(21) Application number: 22845189.4

(22) Date of filing: 12.07.2022

(51) International Patent Classification (IPC):
*H04W 72/04* (2023.01)

(52) Cooperative Patent Classification (CPC):
H04W 72/04; H04W 72/0457; H04W 72/23

(86) International application number:
PCT/CN2022/105195

(87) International publication number:
WO 2023/001024 (26.01.2023 Gazette 2023/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.07.2021 CN 202110839775

(71) Applicant: Huawei Technologies Co., Ltd.
Shenzhen, Guangdong 518129 (CN)

(72) Inventors:
• HOU, Hailong
Shenzhen, Guangdong 518129 (CN)
• JIN, Zhe
Shenzhen, Guangdong 518129 (CN)
• LUO, Zhihu
Shenzhen, Guangdong 518129 (CN)
• QU, Weilin
Shenzhen, Guangdong 518129 (CN)

(74) Representative: Pfenning, Meinig & Partner mbB
Patent- und Rechtsanwälte
Theresienhöhe 11a
80339 München (DE)

(54) **CONFIGURATION METHOD AND COMMUNICATION APPARATUS**

(57) This application relates to a configuration method and a communication apparatus. The configuration method includes: receiving first configuration information from a network device, where the first configuration information is used to configure a plurality of first channel bandwidths, and the plurality of first channel bandwidths include at least two second channel bandwidths with a same subcarrier spacing SCS; and receiving second configuration information from the network device, where the second configuration information is used to configure a plurality of first bandwidth parts BWPs, the plurality of first BWPs include at least two second BWPs with a same SCS, and the SCS of the second BWP is the same as the SCS corresponding to the second channel bandwidth. According to the configuration method of this application, a terminal device may determine a plurality of associated BWPs (namely, BWPs with a same SCS) in a channel bandwidth configured by the network device, to reduce a switching delay of the terminal device switching between two associated BWPs.

FIG. 3

EP 4 358 618 A1

**Description**

This application claims priority to Chinese Patent Application No. 202110839775.8, filed with the China National Intellectual Property Administration on July 23, 2021 and entitled "CONFIGURATION METHOD AND COMMUNICATION APPARATUS", which is incorporated herein by reference in its entirety.

**TECHNICAL FIELD**

This application relates to the field of communication technologies, and in particular, to a configuration method and a communication apparatus.

**BACKGROUND**

To ensure data transmission between a terminal device and a network device, after the terminal device enters a radio resource control (radio resource control, RRC) connected state (RRC connected state) or enters an RRC inactive state (RRC inactive state), the network device configures, for the terminal device by using RRC dedicated signaling, at least one channel bandwidth that matches a bandwidth capability of the terminal device. Each of the at least one channel bandwidth is not greater than the bandwidth capability of the terminal device, and each channel bandwidth corresponds to a different subcarrier spacing (subcarrier spacing, SCS). Further, for each channel bandwidth, the network device configures at least one bandwidth part (bandwidth part, BWP) for the terminal device in the channel bandwidth. The at least one BWP is used for data transmission with the terminal device. An SCS corresponding to each BWP configured in the channel bandwidth is the same as an SCS of the channel bandwidth. A frequency domain resource range of each BWP needs to be within the channel bandwidth. The data transmission between the network device and the terminal device may be dynamically adjusted (for example, a method of current BWP scheduling or cross-BWP scheduling) within a frequency domain resource range corresponding to the at least one BWP. However, at any moment, the terminal device can determine only one BWP (namely, an active BWP) for data transmission with the network device. That is, it may be understood as that a frequency domain resource corresponding to each time of data transmission of the terminal device can only be within a frequency domain resource range

In the manner of configuring the BWP, a BWP used by the terminal device for data transmission is limited by the bandwidth capability of the terminal device, and a frequency selective scheduling gain and a frequency diversity gain of the terminal device are affected. In addition, when the terminal device needs to perform data transmission within a larger frequency domain resource range, the network device needs to implement BWP switching in a manner of reconfiguring a channel bandwidth of the terminal device, to meet a transmission requirement of the terminal device. The manner of configuring the BWP causes a large configuration delay, and data transmission performance of the terminal device is affected.

**SUMMARY**

Embodiments of this application provide a configuration method and a communication apparatus, so that a terminal device may determine a plurality of associated BWPs based on the configuration method.

According to a first aspect, an embodiment of this application provides a configuration method. The method may be performed by a terminal device, or may be performed by a chip used in the terminal device. The following provides descriptions by using an example in which the method is performed by the terminal device. The terminal device receives first configuration information from a network device, where the first configuration information is used to configure a plurality of first channel bandwidths, and the plurality of first channel bandwidths include at least two second channel bandwidths with a same subcarrier spacing SCS. The terminal device receives second configuration information from the network device, where the second configuration information is used to configure a plurality of first bandwidth parts BWPs, the plurality of first BWPs include at least two second BWPs with a same SCS, and the SCS of the second BWP is the same as the SCS corresponding to the second channel bandwidth.

In comparison with a manner in which a plurality of channel bandwidths are configured for the terminal device, and SCSs of channel bandwidths in the plurality of channel bandwidths need to be different, according to the configuration method in the first aspect, both a plurality of channel bandwidths with a same SCS and a plurality of channel bandwidths with different SCSs may be configured. This improves flexibility of a channel bandwidth configuration, and expands an operating bandwidth range of the terminal. In addition, when the terminal device needs to perform BWP switching, in comparison with a manner in which the terminal device needs to perform a BWP in a manner of reconfiguring the channel bandwidth, fast switching may be performed between two BWPs with a same SCS that are configured according to the configuration method of the first aspect. This reduces a switching delay of the terminal device during the BWP switching.

In an optional implementation, the first configuration information includes first sub-configuration information, or first sub-configuration information and second sub-configuration information, where the first sub-configuration information is used to configure the at least two second channel bandwidths with the same SCS; or the second sub-configuration information is used to configure a third channel bandwidth other than the second channel bandwidth. The optional implementation is implemented, so that the SCSs of the channel bandwidths in the plurality of configured channel bandwidths no longer need to be different, that is, the channel bandwidths with the same SCS and the channel bandwidths with different SCSs may exist in the plurality of channel bandwidths. This improves flexibility of a channel bandwidth configuration method, and may adapt to a plurality of types of service requirements and operating scenarios. The plurality of channel bandwidths with the same SCS are configured, so that a plurality of BWPs with a same SCS may operate on a larger range of frequency domain resources. This improves flexibility of resource scheduling, and improves transmission performance between the terminal device and the network device.

In an optional implementation, the first sub-configuration information includes one or more of at least two frequency domain locations, at least two frequency domain starting locations, or at least two frequency domain offsets corresponding to the at least two second channel bandwidths with the same SCS. The optional implementation is implemented, so that no longer only one channel bandwidth can be configured in configuration information corresponding to each channel bandwidth. Instead, the plurality of channel bandwidths with the same SCS may be configured by adding a plurality of frequency domain locations to configuration information corresponding to a specific channel bandwidth, to reduce signaling overheads, save communication resources, and improve resource utilization. In addition, the plurality of channel bandwidths with the same SCS are configured, so that the plurality of BWPs with the same SCS may operate on the larger range of the frequency domain resources. This improves the flexibility of the resource scheduling, and improves the transmission performance between the terminal device and the network device.

In an optional implementation, the first configuration information includes at least two frequency domain locations, and each frequency domain location indicates a location of the first channel bandwidth.

In an optional implementation, indication information is received from the network device, where the indication information indicates that one of the at least two second BWPs with the same SCS is in a valid state.

In an optional implementation, control information is received from the network device, where the control information indicates a fifth BWP activated at a first moment; and when the fifth BWP is associated with a sixth BWP, a switching delay of switching from the sixth BWP to the fifth BWP is a first switching delay, the sixth BWP is a BWP activated at a second moment, and the second moment is before the first moment; or when the fifth BWP is not associated with a sixth BWP, a switching delay of switching from the sixth BWP to the fifth BWP is a second switching delay, where the first switching delay is less than the second switching delay, and the fifth BWP is different from the sixth BWP. The optional implementation is implemented, so that a switching delay of the terminal device switching between two associated BWPs is less than a switching delay of the terminal device switching between two unassociated BWPs.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP. The optional implementation is implemented, so that a plurality of determining manners are provided for determining that two BWPs are associated, thereby improving flexibility of configuring associated BWPs.

In an optional implementation, when the fifth BWP is associated with the sixth BWP, the at least two second BWPs with the same SCS include the fifth BWP and the sixth BWP.

According to a second aspect, an embodiment of this application provides a configuration method. The method may be performed by a terminal device, or may be performed by a chip used in the terminal device. The following provides descriptions by using an example in which the method is performed by the terminal device. The terminal device receives third configuration information from a network device, where the third configuration information is used to configure a plurality of first channel bandwidths, and each of the plurality of first channel bandwidths corresponds to a different subcarrier spacing SCS. The terminal device receives fourth configuration information from the network device, where the fourth configuration information is used to configure a plurality of first BWPs, the plurality of first BWPs are associated with the plurality of first channel bandwidths, and the plurality of first BWPs include at least two second BWPs with a same SCS.

When the terminal device needs to perform BWP switching, in comparison with a manner in which the terminal device needs to perform a BWP in a manner of reconfiguring a channel bandwidth, fast switching may be performed between a plurality of BWPs with a same SCS that are configured according to the configuration method of the second aspect. This reduces a switching delay of the terminal device during the BWP switching.

In an optional implementation, a fourth channel bandwidth is determined when a frequency domain resource range of the second BWP exceeds a frequency domain resource range of a first channel bandwidth corresponding to the second BWP, where a frequency domain resource range of the fourth channel bandwidth includes the frequency domain resource range of the second BWP. The optional implementation is implemented, so that an operating BWP range of the terminal device may no longer be limited by a bandwidth capability of the terminal device, to improve a frequency selective scheduling gain or a frequency diversity gain of the terminal device.

In an optional implementation, the fourth channel bandwidth meets one or more of the following conditions: a frequency domain resource starting location of the fourth channel bandwidth is the same as a frequency domain resource starting location of the second BWP; an SCS of the fourth channel bandwidth is the same as an SCS of the second BWP; a size of the fourth channel bandwidth is the same as a size of the first channel bandwidth corresponding to the second BWP; or a relative location of the second BWP and the fourth channel bandwidth is the same as a relative location of a fourth BWP and the first channel bandwidth corresponding to the second BWP, where an SCS of the second BWP is the same as an SCS of the fourth BWP.

In an optional implementation, indication information is received from the network device, where the indication information indicates that one of the at least two second BWPs with the same SCS is in a valid state.

In an optional implementation, control information is received from the network device, where the control information indicates a fifth BWP activated at a first moment; and when the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with a sixth BWP, a switching delay of the terminal device switching from the sixth BWP to the fifth BWP is a second switching delay, where the first switching delay is less than the second switching delay, and the fifth BWP is different from the sixth BWP. The optional implementation is implemented, so that a switching delay of the terminal device switching between two associated BWPs is less than a switching delay of the terminal device switching between two unassociated BWPs.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP. The optional implementation is implemented, so that a plurality of determining manners are provided for determining that two BWPs are associated, thereby improving flexibility of configuring associated BWPs.

In an optional implementation, when the fifth BWP is associated with the sixth BWP, the at least two second BWPs with the same SCS include the fifth BWP and the sixth BWP.

According to a third aspect, an embodiment of this application provides a configuration method. The method may be performed by a network device, or may be performed by a chip used in the network device. The following provides descriptions by using an example in which the method is performed by the network device. The network device sends first configuration information to a terminal device, where the first configuration information is used to configure a plurality of first channel bandwidths, and the plurality of first channel bandwidths include at least two second channel bandwidths with a same subcarrier spacing SCS; and sends second configuration information to the terminal device, where the second configuration information is used to configure a plurality of first bandwidth parts BWPs, the plurality of first BWPs include at least two second BWPs with a same SCS, and the SCS of the second BWP is the same as the SCS corresponding to the second channel bandwidth.

For beneficial effects of the configuration method based on the second aspect, refer to the beneficial effects of the configuration method based on the first aspect. Details are not described herein again.

In an optional implementation, the first configuration information includes first sub-configuration information, or first sub-configuration information and second sub-configuration information, where the first sub-configuration information is used to configure the at least two second channel bandwidths with the same SCS; or the second sub-configuration information is used to configure a third channel bandwidth other than the second channel bandwidth. The optional implementation is implemented, so that a plurality of channel bandwidths may be configured, and channel bandwidths with a same SCS and channel bandwidths with different SCSs may exist in the plurality of channel bandwidths. This improves flexibility of a channel bandwidth configuration method.

In an optional implementation, the first sub-configuration information includes one or more of at least two frequency domain locations, at least two frequency domain starting locations, or at least two frequency domain offsets corresponding to the at least two second channel bandwidths with the same SCS. The optional implementation is implemented, so that a plurality of channel bandwidths with a same SCS may be configured by adding a plurality of frequency domain locations to configuration information corresponding to a specific channel bandwidth, to reduce a communication transmission data volume, and save communication resources.

In an optional implementation, the first configuration information includes at least two frequency domain locations, and each frequency domain location indicates a location of the first channel bandwidth.

In an optional implementation, indication information is sent to the terminal device, where the indication information indicates that one of the at least two second BWPs with the same SCS is in a valid state.

In an optional implementation, control information is sent to the terminal device, where the control information indicates a fifth BWP activated at a first moment; and when the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with a sixth BWP, a switching delay of the terminal device switching from the sixth BWP to the fifth BWP is a second switching delay, where the first switching delay is less than the second switching delay, and the fifth BWP is different from the sixth BWP. The optional implementation is implemented, so that a switching delay of the terminal device switching between two associated BWPs is less than a switching delay of the terminal device switching between two unassociated BWPs.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP. The optional implementation is implemented, so that a plurality of determining manners are provided for determining that two BWPs are associated, thereby improving flexibility of configuring associated BWPs.

In an optional implementation, when the fifth BWP is associated with the sixth BWP, the at least two second BWPs with the same SCS include the fifth BWP and the sixth BWP.

According to a fourth aspect, an embodiment of this application provides a configuration method. The method may be performed by a network device, or may be performed by a chip used in the network device. The following provides descriptions by using an example in which the method is performed by the network device. The network device sends third configuration information to a terminal device, where the third configuration information is used to configure a plurality of first channel bandwidths, and each of the plurality of first channel bandwidths corresponds to a different subcarrier spacing SCS; and sends fourth configuration information to the terminal device, where the fourth configuration information is used to configure a plurality of first BWPs, the plurality of first BWPs are associated with the plurality of first channel bandwidths, and the plurality of first BWPs include at least two second BWPs with a same SCS.

For beneficial effects of the configuration method based on the fourth aspect, refer to the beneficial effects of the configuration method based on the second aspect. Details are not described herein again.

In an optional implementation, a fourth channel bandwidth is determined when a frequency domain resource range of the second BWP exceeds a frequency domain resource range of a first channel bandwidth corresponding to the second BWP, where a frequency domain resource range of the fourth channel bandwidth includes the frequency domain resource range of the second BWP. The optional implementation is implemented, so that an operating BWP range of the terminal device may no longer be limited by a bandwidth capability of the terminal device, to improve a frequency selective scheduling gain or a frequency diversity gain of the terminal device.

In an optional implementation, the fourth channel bandwidth meets one or more of the following conditions: a frequency domain resource starting location of the fourth channel bandwidth is the same as a frequency domain resource starting location of the second BWP; an SCS of the fourth channel bandwidth is the same as an SCS of the second BWP; a size of the fourth channel bandwidth is the same as a size of the first channel bandwidth corresponding to the second BWP; or a relative location of the second BWP and the fourth channel bandwidth is the same as a relative location of a fourth BWP and the first channel bandwidth corresponding to the second BWP, where an SCS of the second BWP is the same as an SCS of the fourth BWP.

In an optional implementation, indication information is sent to the terminal device, where the indication information indicates that one of the at least two second BWPs with the same SCS is in a valid state.

In an optional implementation, control information is sent to the terminal device, where the control information indicates a fifth BWP activated at a first moment; and when the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with a sixth BWP, a switching delay of the terminal device switching from the sixth BWP to the fifth BWP is a second switching delay, where the first switching delay is less than the second switching delay, and the fifth BWP is different from the sixth BWP. The optional implementation is implemented, so that a switching delay of the terminal device switching between two associated BWPs is less than a switching delay of the terminal device switching between two unassociated BWPs.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP. The optional implementation is implemented, so that a plurality of determining manners are provided for determining that two BWPs are associated, thereby improving flexibility of configuring associated BWPs.

In an optional implementation, when the fifth BWP is associated with the sixth BWP, the at least two second BWPs with the same SCS include the fifth BWP and the sixth BWP.

According to a fifth aspect, this application provides a communication apparatus. The apparatus may be an apparatus in a terminal device or an apparatus that can be matched and used with the terminal device. The communication apparatus may alternatively be a chip system. The communication apparatus may perform the method according to the first aspect or the second aspect. A function of the communication apparatus may be implemented by hardware, or may be implemented by hardware by executing corresponding software. The hardware or the software includes one or more units corresponding to the function. The unit may be software and/or hardware. For operations performed by the communication apparatus and beneficial effects thereof, refer to the method and the beneficial effects according to the first aspect or the second aspect. Repeated content is not described again.

According to a sixth aspect, this application provides a communication apparatus. The apparatus may be an apparatus in a network device or an apparatus that can be matched and used with the network device. The communication apparatus may alternatively be a chip system. The communication apparatus may perform the method according to the third aspect or the fourth aspect. A function of the communication apparatus may be implemented by hardware, or may be implemented by hardware by executing corresponding software. The hardware or the software includes one or more units corresponding to the function. The unit may be software and/or hardware. For operations performed by the communication apparatus and beneficial effects thereof, refer to the method and the beneficial effects according to the third aspect or the fourth aspect. Repeated content is not described again.

According to a seventh aspect, this application provides a communication apparatus. The communication apparatus may be the terminal device in the foregoing method embodiments, or a chip disposed in the terminal device. The communication apparatus includes a communication interface and a processor, and optionally further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to an eighth aspect, this application provides a communication apparatus. The communication apparatus may be the network device in the foregoing method embodiments, or a chip disposed in the network device. The communication apparatus includes a communication interface and a processor, and optionally further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a ninth aspect, this application provides a computer-readable storage medium. The computer-readable storage medium is configured to store computer-executable instructions. When the computer-executable instructions are executed, the method performed by the terminal device in the method according to the first aspect or the second aspect is implemented.

According to a tenth aspect, this application provides a computer-readable storage medium. The computer-readable storage medium is configured to store computer-executable instructions. When the computer-executable instructions are executed, the method performed by the network device in the method according to the third aspect or the fourth aspect is implemented.

According to an eleventh aspect, this application provides a computer program product, including a computer program. When the computer program is executed, the method performed by the terminal device in the method according to the first aspect or the second aspect is implemented.

According to a twelfth aspect, this application provides a computer program product, including a computer program. When the computer program is executed, the method performed by the network device in the method according to the third aspect or the fourth aspect is implemented.

According to a thirteenth aspect, this application provides a communication system. The communication system includes the communication apparatus according to the fifth aspect or the seventh aspect and the communication apparatus according to the sixth aspect or the eighth aspect.

**BRIEF DESCRIPTION OF DRAWINGS**

FIG. 1 is a schematic diagram of a system architecture according to this application;
FIG. 2 is a schematic diagram of a BWP switching delay according to this application;
FIG. 3 is a schematic flowchart of a configuration method according to this application;
FIG. 4 is a schematic diagram of configuration information of a channel bandwidth according to this application;
FIG. 5 is a schematic flowchart of another configuration method according to this application;
FIG. 6a is a schematic diagram of an associated BWP according to this application;
FIG. 6b is a schematic diagram of another associated BWP according to this application;
FIG. 7 is a schematic diagram of a structure of a communication apparatus according to this application; and
FIG. 8 is a schematic diagram of a structure of another communication apparatus according to this application.

**DESCRIPTION OF EMBODIMENTS**

The following further describes specific embodiments of this application in detail with reference to accompanying drawings.

In the specification, the claims, and the accompanying drawings of this application, terms "first", "second", and the like are used to distinguish between different objects, and are not used to describe a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase appearing at various locations in this specification may neither necessarily mean a same embodiment, nor mean an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

The method provided in embodiments of this application may be applied to various communication systems. For example, the communication system may be a machine-to-machine (machine-to-machine, M2M) communication system, an internet of things (internet of things, IoT) system, a narrow band internet of things (narrow band internet of things, NB-IoT) system, and a long term evolution (long term evolution, LTE) system, or may be a 5th generation (5th generation, 5G) communication system, or may be an LTE and 5G hybrid architecture, or may be a 5G new radio (new radio, NR) system, a new communication system emerging in future communication development, and the like.

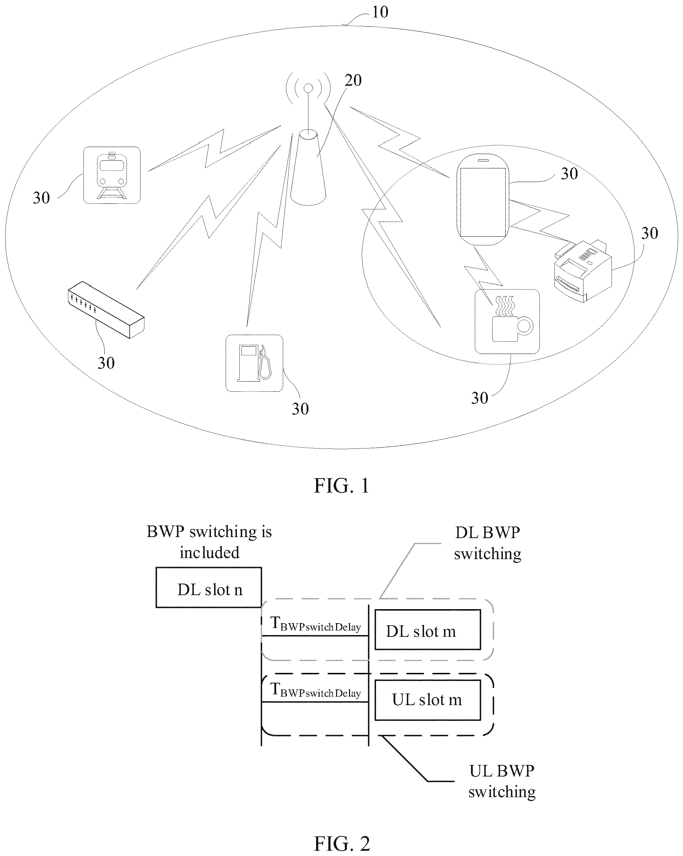

FIG. 1 is a schematic diagram of a system architecture 10 according to an embodiment of this application. As shown in FIG. 1, the system architecture 10 includes a network device 20 and a terminal device 30. There is an air interface communication connection between the network device 20 and the terminal device 30. It should be understood that a quantity of network devices 20 and a quantity of terminal devices 30 shown in FIG. 1 are merely examples, and cannot be considered as a limitation on an application scenario of this application. The following further describes in detail the terminal device and the network device in this application.

I. Terminal device

The terminal device in embodiments of this application is an entity that is on a user side and that is configured to receive or transmit a signal. The terminal device may be a device that provides a user with voice and/or data connectivity, for example, a handheld device having a wireless connection function or a vehicle-mounted device. The terminal device may alternatively be another processing device connected to a wireless modem. The terminal device may communicate with a radio access network (radio access network, RAN). The terminal device may also be referred to as a wireless terminal device, a subscriber unit (subscriber unit), a subscriber station (subscriber station), a mobile station (mobile station), a mobile (mobile) console, a remote station (remote station), an access point (access point), a remote terminal device (remote terminal), an access terminal device (access terminal), a user terminal device (user terminal), a user agent (user agent), a user device (user device), user equipment (user equipment, UE), or the like. The terminal device may be a mobile terminal device, such as a mobile phone (which is also referred to as a "cellular" phone) and a computer having the mobile terminal device. For example, the terminal device may be a portable mobile apparatus, a pocket-sized mobile apparatus, a handheld mobile apparatus, a computer built-in mobile apparatus, or a vehicle-mounted mobile apparatus, where the mobile apparatuses exchange languages and/or data with the radio access network. For example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, a personal digital assistant (personal digital assistant, PDA), or the like. A common terminal device includes, for example, a vehicle, an unmanned aerial vehicle, a mechanical arm, a mobile phone, a tablet computer, a notebook computer, a palmtop computer, a mobile internet device (mobile internet device, MID), and a wearable device such as a smartwatch, a smart band, a pedometer, and the like. However, embodiments of this application are not limited thereto.

It should be understood that the terminal device in this application may be a new radio (new radio, NR) reduced capability (reduced capability, REDCAP) terminal device, or may be a normal (NR legacy) terminal device whose channel bandwidth is not reduced. A difference between the NR REDCAP terminal device and the NR legacy terminal device includes at least one of the following:

1. Bandwidth capabilities are different. For example, the NR legacy terminal device may support using a maximum of a 100 MHz frequency domain resource for data transmission with the network device on one carrier, and the NR REDCAP terminal device may support using a maximum of a 20 MHz, 10 MHz, or 5 MHz frequency domain resource for data transmission with the network device on one carrier.

2. Quantities of transceiver antennas are different. For example, a minimum antenna configuration supported by the NR legacy terminal device is 4T2R, that is, in the minimum antenna configuration, four receive antennas are configured to receive downlink data, and two transmit antennas are configured to transmit uplink data; and a maximum antenna configuration supported by the NR REDCAP terminal device is lower than 4T2R. For example, NR REDCAP UE supports only 2T1R, or may also support 2T2R.

3. Maximum uplink transmit powers are different. For example, a maximum uplink transmit power of the NR legacy terminal device may be 23 dBm or 26 dBm, and a maximum uplink transmit power of the NR REDCAP terminal device can be only one value in 4 dBm to 20 dBm.

4. The NR REDCAP terminal device and the NR legacy terminal device correspond to different protocol versions. For example, an NR Rel-15 terminal device and an NR Rel-16 terminal device may be considered as NR legacy terminal devices, and the NR REDCAP terminal device may be considered as an NR Rel-17 terminal device.

5. The NR REDACP terminal device and the NR legacy terminal device support different carrier aggregation (carrier aggregation, CA) capabilities. For example, the NR legacy terminal device may support a carrier aggregation, and the NR REDCAP terminal device does not support the carrier aggregation. For another example, both the NR REDCAP terminal device and the NR Legacy terminal device support the carrier aggregation, but a maximum quantity of carrier aggregations supported by the NR legacy terminal device at the same time is greater than a maximum quantity of carrier aggregations supported by the NR REDCAP terminal device at the same time. For example, the NR legacy terminal device may support a maximum of five carrier aggregations or 32 carrier aggregations at the same time, and the NR REDCAP terminal device supports a maximum of two carrier aggregations at the same time.

6. The NR legacy terminal device supports full-duplex FDD, and the NR REDCAP terminal device supports only half-duplex FDD.

7. The NR REDCAP terminal device and the NR legacy terminal device have different data processing time capabilities. For example, a minimum delay between receiving downlink data and sending a feedback on the downlink data by the NR legacy terminal device is less than a minimum delay between receiving downlink data and sending a feedback on the downlink data by the NR REDCAP terminal device; and/or a minimum delay between sending uplink data and receiving a feedback on the uplink data by the NR Legacy terminal device is less than a minimum delay between sending uplink data and receiving a feedback on the uplink data by the NR REDCAP terminal device.

8. The NR legacy terminal device and the NR REDCAP terminal device have different processing capabilities.

9. The NR legacy terminal device and the NR REDCAP terminal device correspond to different uplink and/or downlink peak transmission rates.

II. Network device

The network device (or referred to as an access network device) in embodiments of this application is an entity that is on a network side and that is configured to transmit or receive a signal. The network device may be configured to mutually convert a received over-the-air frame and an internet protocol (internet protocol, IP) packet, and serve as a router between the terminal device and a remaining part of an access network, where the remaining part of the access network may include an IP network and the like. The access network device may further coordinate attribute management of an air interface. For example, the access network device may be an evolved NodeB (evolved NodeB, eNB or e-NodeB) in LTE, a new radio controller (new radio controller, NR controller), an ng-eNB, a gNodeB (gNB) in a 5G system, a central unit (central unit), a new radio base station, a remote radio module, a micro base station, a relay (relay), a distributed unit (distributed unit), a transmission reception point (transmission reception point, TRP), a transmission point (transmission point, TP), or any other radio access device. However, embodiments of this application are not limited thereto.

To facilitate understanding of the content of this solution, in the following, some terms in embodiments of this application are explained and described to facilitate understanding of a person skilled in the art.

1. Bandwidth part (bandwidth part, BWP)

There are terminals with various bandwidth capabilities in NR. To support terminals with different bandwidth capabilities, the bandwidth part (bandwidth part, BWP) is introduced in NR. The BWP is a segment of consecutive resources in frequency domain, and includes an uplink BWP and a downlink BWP. The uplink BWP and the downlink BWP are respectively used for uplink transmission and downlink transmission. Generally, in an initial access phase of a terminal, a base station configures an initial uplink BWP and an initial downlink BWP for the terminal. After the terminal enters an RRC connected state, the base station additionally configures one or more terminal-specific uplink BWPs and downlink BWPs for the terminal. Uplink channel transmission or uplink signal transmission is completely performed in the uplink BWP, and downlink channel transmission or downlink signal transmission is completely performed in the downlink BWP. The terminal may receive a plurality of BWP configurations, but the terminal can operate on only one of the BWPs at the same time. The BWP is referred to as an active BWP.

In an embodiment, a bandwidth of the BWP cannot exceed a maximum bandwidth corresponding to the terminal (that is, cannot exceed a bandwidth capability range supported by the terminal). Otherwise, the terminal cannot successfully access a network.

2. BWP switching delay

The BWP switching delay is a delay of switching between two different BWPs. For example, after receiving physical layer signaling for triggering BWP switching, the terminal device may switch data transmission between the terminal device and the base station from a BWP A to a BWP B after the BWP switching delay, where the BWP A is a BWP including the physical layer signaling for triggering the BWP switching, and the BWP B is a BWP different from the BWP A. It should be understood that if two BWPs are different, it may be considered that configuration parameters corresponding to the two BWPs are different in at least one of the following:

(a) Center frequency locations corresponding to the two BWPs are different.
(b) BWP bandwidths corresponding to the two BWPs are different.
(c) Subcarrier spacings (subcarrier spacings, SCSs) used for data transmission corresponding to the two BWPs are different.
(d) Quantities of multiple input multiple output (multiple input multiple output, MIMO) data transmission layers or antennas corresponding to the two BWPs are different.
(e) Physical downlink control channel (physical downlink control channel, PDCCH) configurations, PDSCH configurations, physical uplink control channel (physical uplink control channel, PUCCH) configurations, or physical uplink shared channel (physical uplink shared channel, PUSCH) configurations corresponding to the two BWPs are different.

A manner of triggering the BWP switching includes: BWP switching triggered based on physical layer signaling, BWP switching triggered based on RRC signaling, BWP switching triggered based on a timer, or BWP switching triggered based on an RRC preconfiguration or a predefinition. For example, the following describes in detail the BWP switching delay triggered based on the physical layer signaling and the BWP switching delay triggered based on the RRC signaling.

(1) BWP switching delay triggered based on physical layer signaling

FIG. 2 shows the BWP switching delay triggered based on the physical layer signaling (such as downlink control information (downlink control information, DCI)). In downlink BWP switching (namely, DL BWP switching shown in FIG. 2), the terminal receives BWP switching request information sent by the network device in a downlink time unit n (namely, a DL slot n shown in FIG. 2). The terminal needs to receive a PDSCH and another physical downlink channel or downlink signal on a nearest downlink time unit (namely, a DL slot m shown in FIG. 2) after a BWP switching delay (namely, $T_{BWPswitchDelay}$ shown in FIG. 2) after the downlink time unit n. In uplink BWP switching (namely, a UL BWP switching shown in FIG. 2), the terminal device needs to send a PUSCH and another physical uplink channel or uplink signal on a nearest uplink time unit (namely, a UL slot m shown in FIG. 2) after the BWP switching delay (namely, $T_{BWPswitchDelay}$ shown in FIG. 2) after the downlink time unit n. It should be understood that in FIG. 2, an example in which a time unit is a slot (slot) is merely used for description, and this cannot be considered as a limitation on the technical solutions of this application.

Generally, there are two types of BWP switching delays corresponding to the terminal device. Table 1 shows BWP switching delays supported by the terminal device.

**Table 1**

| $\mu$ | NR slot length (ms) | BWP switching delay (slots) | |
|---|---|---|---|
| | | Type 1 | Type 2 |
| 0 | 1 | 1 | 3 |
| 1 | 0.5 | 2 | 5 |
| 2 | 0.25 | 3 | 9 |
| 3 | 0.125 | 6 | 18 |

$\mu$ corresponds to different SCSs. Specifically: when $\mu$ is 0, a corresponding SCS is 15 kHz; when $\mu$ is 1, a corresponding SCS is 30 kHz; when $\mu$ is 2, a corresponding SCS is 60 kHz; and when $\mu$ is 3, a corresponding SCS is 120 kHz. The type 1 and the type 2 of the BWP switching delay are determined based on a reporting capability of the terminal device. For example, if the reporting capability of the terminal device supports only the type 1 of the BWP switching delay, a delay corresponding to BWP switching of the terminal device triggered based on a physical layer is shown in the type 1 in Table 1. If the reporting capability of the terminal device supports only the type 2, the delay corresponding to the BWP switching of the terminal device triggered based on the physical layer is shown in the type 2 in Table 1.

(2) BWP switching delay triggered based on RRC signaling

The BWP switching delay triggered based on the RRC signaling means that the terminal receives, in a downlink time unit n, RRC signaling indicating BWP switching. The terminal needs to receive a PDSCH and another physical downlink channel or downlink signal on a downlink time unit that is closest to the downlink time unit n after an interval of $T_{RRCDelay}$, or the terminal receives and sends a PUSCH and another physical uplink channel or uplink signal on an uplink time unit that is closest to the downlink time unit n after the interval of $T_{RRCDelay}$, where the $T_{RRCDelay}$ is the BWP switching delay triggered based on the RRC signaling. For a calculation formula of $T_{RRCDelay}$, refer to the formula (1):

$$T_{RRCDelay}=T_{RRCprocessingDelay}+T_{BWPswitchDelayRRC} \tag{1}$$

$T_{RRCDelay}$ is the BWP switching delay triggered based on the RRC signaling, $T_{RRCprocessingDelay}$ is a delay introduced in an RRC process, and $T_{BWPswitchDelayRRC}$ is time required by UE to perform BWP switching.

Generally, after the terminal device enters the RRC connected state or the terminal device enters an RRC inactive state, the network device configures at least one channel bandwidth (where the channel bandwidth may also be referred to as a carrier in this application) for the terminal device based on a bandwidth capability of the terminal device, and each of the at least one channel bandwidth is not greater than the bandwidth capability of the terminal device. Further, the network device configures at least one BWP for the terminal device within a frequency domain range of the at least one channel bandwidth, and the at least one BWP is used for data transmission between the terminal device and the network device. It may be learned that the BWP configured in this manner is limited by the bandwidth capability of the terminal device, and a frequency selective scheduling gain and a frequency diversity gain of the terminal device are affected. In addition, because the terminal device can perform data transmission with the network device only in a frequency domain resource range of one active BWP at any moment, when the terminal device needs to perform data transmission within a larger frequency domain resource range, the terminal device needs to perform BWP switching based on an indication of the network device. Consequently, the BWP switching delay is generated. When the BWP switching delay is large, data transmission performance of the terminal device is affected.

This application provides a configuration method, so that a plurality of channel bandwidths with a same SCS and a plurality of BWPs with a same SCS may be configured. When a terminal device needs to perform BWP switching, the channel bandwidth no longer needs to be reconfigured by using RRC, and fast switching between the plurality of BWPs with the same SCS is implemented within a range of a plurality of preconfigured channel bandwidths with a same SCS. Therefore, a switching delay of the terminal device switching between a plurality of associated BWPs is reduced. In some application scenarios, a BWP switching delay is further reduced, and fast load balancing, high-priority service avoidance, fast interference avoidance, and the like may be implemented. For example, when load on a specific BWP is high, transmission of some service data may be switched to a BWP with low load by using the invention solution in this application, to implement the fast load balancing. For another example, when transmission of a high-priority service on a current BWP needs to be performed, transmission of some service data may be switched to another BWP by using the invention solution in this application, to implement the high-priority service avoidance. For another example, when interference on a specific BWP is high, transmission of some service data may be switched to a BWP with low interference by using the invention solution in this application, to implement the fast interference avoidance. In addition, after a frequency domain resource range of a BWP exceeds a frequency domain resource range of a channel bandwidth corresponding to the BWP, this application may re-determine a channel bandwidth including a frequency domain range of the BWP based on the frequency domain resource range of the BWP, and a frequency domain range of the channel bandwidth may not be limited by a bandwidth capability of the terminal device, so that the frequency domain range of the BWP may no longer be limited by the bandwidth capability of the terminal device. This improves a frequency selective scheduling gain and/or a frequency diversity gain in data transmission of the terminal device.

The following further describes a configuration method and a communication apparatus provided in this application with reference to the accompanying drawings.

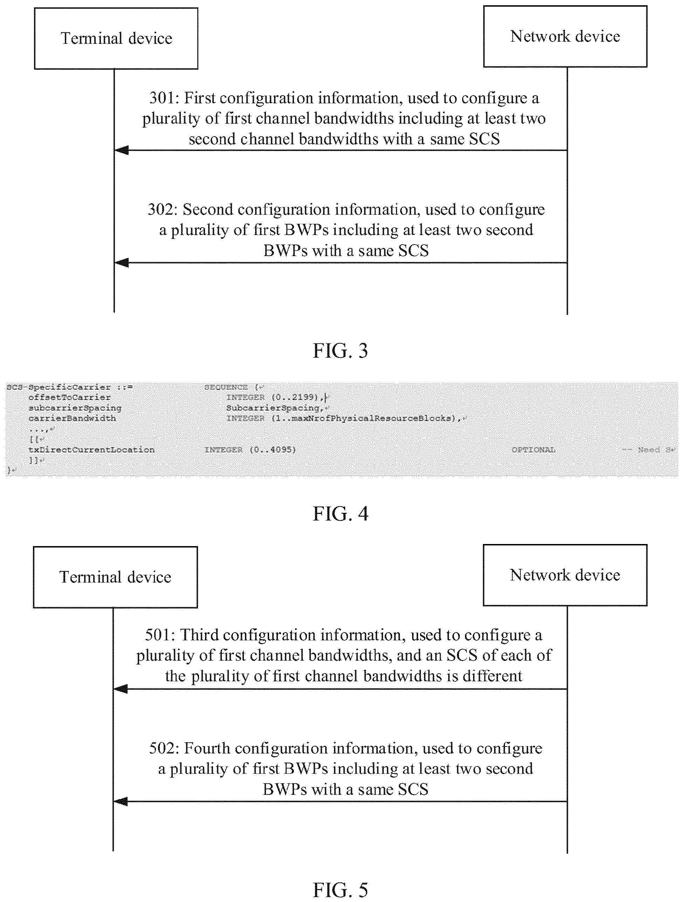

FIG. 3 is a schematic flowchart of a configuration method according to an embodiment of this application. As shown in FIG. 3, the configuration method includes the following steps 301 and 302. The method shown in FIG. 3 may be performed by a terminal device or a chip in the terminal device, or may be performed by a network device or a chip in the network device. FIG. 3 is described by using an example in which the method is performed by the terminal device and the network device.

301: Receive first configuration information from the network device, where the first configuration information is used to configure a plurality of first channel bandwidths, and the plurality of first channel bandwidths include at least two second channel bandwidths with a same SCS.

The network device may send the first configuration information to the terminal device by using RRC signaling, where the first configuration information is used to configure the plurality of first channel bandwidths. The terminal device determines the plurality of first channel bandwidths from a system bandwidth of the network device based on the first configuration information, where the plurality of first channel bandwidths include the at least two second channel bandwidths with the same SCS.

It may be understood that, that the plurality of first channel bandwidths include at least two second channel bandwidths with a same SCS includes the following two cases:

Case 1: SCSs of all the plurality of first channel bandwidths are the same.

For example, the plurality of first channel bandwidths include: a channel bandwidth 10, a channel bandwidth 11, and a channel bandwidth 12, and the channel bandwidth 10, the channel bandwidth 11, and the channel bandwidth 12 correspond to a same SCS, and the SCS is an SCS 1.

In the case, the first configuration information includes first sub-configuration information, where the first sub-configuration information is used to configure the at least two second channel bandwidths with the same SCS. It may be understood as that the SCSs of all the plurality of first channel bandwidths configured by using the first configuration information are the same.

Specifically, in the case, configuration manners in which the first configuration information is used to configure the plurality of first channel bandwidths include:

Manner 1: The first configuration information includes configuration information of the plurality of first channel bandwidths, and configuration information of each first channel bandwidth includes only one frequency domain location (or referred to as a frequency domain starting location or a frequency domain offset). The terminal device configures the first channel bandwidths based on the configuration information of the first channel bandwidths in the first configuration information.

FIG. 4 is a schematic diagram of configuration information of a first channel bandwidth according to this application. In the configuration information of the first channel bandwidth shown in FIG. 4, a subcarrierSpacing field is used to configure an SCS of the first channel bandwidth, a carrierBandwidth field indicates a bandwidth of the first channel bandwidth, and an offsetToCarrier field indicates a frequency domain location (or referred to as a frequency domain starting location or a frequency domain offset) of the first channel bandwidth. That configuration information of each first channel bandwidth includes only one frequency domain location (or referred to as the frequency domain starting location or the frequency domain offset) may be understood as that the configuration information of the first channel bandwidth includes only one offsetToCarrier field, and only one frequency domain location (or referred to as the frequency domain starting location or the frequency domain offset) can be configured for the offsetToCarrier field. Further, the terminal device determines the plurality of first channel bandwidths based on the configuration information of the plurality of first channel bandwidths shown in FIG. 4.

Manner 2: The first configuration information includes the first sub-configuration information, where the first sub-configuration information includes one or more of at least two frequency domain locations, at least two frequency domain starting locations, or at least two frequency domain offsets corresponding to the at least two second channel bandwidths with the same SCS.

In the configuration manner, when the first sub-configuration information is used to configure the at least two second channel bandwidths with the same SCS, in an optional implementation, at least two offsetToCarrier fields are added to configuration information of a specific second channel bandwidth, and a plurality of offsetToCarrier fields indicate frequency domain location (or referred to as frequency domain starting locations or frequency domain offsets) of the at least two second channel bandwidths.

For example, the first sub-configuration information includes: An SCS of the second channel bandwidth indicated by a subcarrierSpacing field is an SCS 1, a bandwidth of the second channel bandwidth indicated by a carrierBandwidth is 40 MHz, a frequency domain location of the second channel bandwidth indicated by an offsetToCarrier field 1 is a location 1, a frequency domain location of the second channel bandwidth indicated by an offsetToCarrier field 2 is a location 2, and a frequency domain location of the second channel bandwidth indicated by an offsetToCarrier field 3 is a location 3. In this way, three second channel bandwidths configured by using the first sub-configuration information are a channel bandwidth 1, a channel bandwidth 2, and a channel bandwidth 3. The channel bandwidth 1: An SCS is the SCS 1, a bandwidth is 40 MHz, and a location in a system bandwidth is the location 1. The channel bandwidth 2: An SCS is the SCS 1, a bandwidth is 40 MHz, and a location in the system bandwidth is the location 2. The channel bandwidth 3: An SCS is the SCS 1, a bandwidth is 40 MHz, and a location in the system bandwidth is the location 3. It may be understood as that the at least two offsetToCarrier fields are added to configuration information of one first channel bandwidth shown in FIG. 4, where the at least two offsetToCarrier fields indicate the frequency domain locations (or referred to as the frequency domain starting locations or the frequency domain offsets) of the at least two second channel bandwidths.

In another optional implementation, there are at least two frequency domain locations (or referred to as frequency domain starting locations or frequency domain offset values) in an offsetToCarrier field of configuration information of a specific second channel bandwidth.

For example, the first sub-configuration information includes: An SCS of the second channel bandwidth indicated by a subcarrierSpacing field is an SCS 1, a bandwidth of the second channel bandwidth indicated by a carrierBandwidth is 40 MHz, and frequency domain locations of the second channel bandwidth indicated by offsetToCarrier fields are a location 1, a location 2, and a location 3. In this way, it may be understood as that three second channel bandwidths configured by using the first sub-configuration information are a channel bandwidth 1, a channel bandwidth 2, and a channel bandwidth 3. The channel bandwidth 1: An SCS is the SCS 1, a bandwidth is 40 MHz, and a location in a system bandwidth is the location 1. The channel bandwidth 2: An SCS is the SCS 1, a bandwidth is 40 MHz, and a location in the system bandwidth is the location 2. The channel bandwidth 3: An SCS is the SCS 1, a bandwidth is 40 MHz, and a location in the system bandwidth is the location 3. It may be understood as that the at least two offsetToCarrier fields are added to configuration information of one first channel bandwidth shown in FIG. 4, where the at least two offsetToCarrier fields indicate the frequency domain locations (or referred to as the frequency domain starting locations or the frequency domain offsets) of the at least two second channel bandwidths.

It may be learned that in the plurality of second channel bandwidths configured by using the first sub-configuration information in Manner 2, only frequency domain locations in the configuration information of the second channel bandwidths are different. In comparison with the configuration manner in Manner 1, in the configuration manner in Manner 2, the network device may configure the at least two second channel bandwidths with the same SCS by using a small quantity of communication transmission resources. It should be understood that the plurality of second channel bandwidths with the same SCS may be considered as a plurality of different channel bandwidths, or may be understood as that a same channel bandwidth has different frequency domain locations. In the case, the plurality of channel bandwidths with the same SCS may form a channel bandwidth set or a channel bandwidth group (channel bandwidth group).

Case 2: The plurality of first channel bandwidths include one or more groups of second channel bandwidths with a same SCS and another first channel bandwidth (which may be understood as a first channel bandwidth whose SCS is different from the SCS of the group of second channel bandwidths).

In an example, the plurality of first channel bandwidths include one group of second channel bandwidths with a same SCS. For example, the plurality of first channel bandwidths include: a channel bandwidth 10, a channel bandwidth 11, a channel bandwidth 12, and a channel bandwidth 13. The channel bandwidth 10 and the channel bandwidth 12 correspond to a same SCS, namely, an SCS 1, the channel bandwidth 11 corresponds to an SCS 2, and the channel bandwidth 13 corresponds to an SCS 3.

In another example, the plurality of first channel bandwidths include a plurality of groups of second channel bandwidths with a same SCS. For example, the plurality of first channel bandwidths include two groups of second channel bandwidths with a same SCS: a channel bandwidth 10, a channel bandwidth 11, a channel bandwidth 12, a channel bandwidth 13, and a channel bandwidth 14. The channel bandwidth 10, the channel bandwidth 11, and the channel bandwidth 12 correspond to a same SCS, and the SCS is an SCS 1. The channel bandwidth 13 and the channel bandwidth 14 correspond to a same SCS, and the SCS is an SCS 2.

In the case, the first configuration information includes first sub-configuration information and second sub-configuration information, where the first sub-configuration information is used to configure the at least two second channel bandwidths with the same SCS, and the second sub-configuration information is used to configure a third channel bandwidth other than the second channel bandwidth (namely, the another first channel bandwidth). It may be understood as that SCSs of the first channel bandwidths configured by using the first sub-configuration information are the same, and SCSs of first channel bandwidths configured by using the second sub-configuration information are different.

Specifically, in the case, configuration manners in which the first configuration information is used to configure the plurality of first channel bandwidths includes:
Manner 1: The first configuration information includes configuration information of a plurality of second channel bandwidths, and configuration information of each second channel bandwidth includes only one frequency domain location (or referred to as a frequency domain starting location or a frequency domain offset). The second sub-configuration information includes configuration information of a plurality of third channel bandwidths, and configuration information of each third channel bandwidth includes only one frequency domain location (or referred to as a frequency domain starting location or a frequency domain offset).

That is, it may be understood as that in the configuration manner, the first configuration information includes at least two frequency domain locations, and each frequency domain location indicates a location of the first channel bandwidth.

Manner 2: The first sub-configuration information includes one or more of at least two frequency domain locations, at least two frequency domain starting locations, or at least two frequency domain offsets corresponding to the at least two second channel bandwidths with the same SCS. The second sub-configuration information includes configuration information of a plurality of third channel bandwidths, and configuration information of each third channel bandwidth includes only one frequency domain location (or referred to as a frequency domain starting location or a frequency domain offset).

That is, it may be understood as that in the configuration manner, the first configuration information includes the first sub-configuration information and second configuration information. The first sub-configuration information includes configuration information of one or more groups of second channel bandwidths, and information of each group of second channel bandwidths includes one subcarrierSpacing field, one carrierBandwidth field, and a plurality of offsetToCarrier fields (or one offsetToCarrier field has a plurality of frequency domain locations). The second sub-configuration information includes the configuration information of the plurality of third channel bandwidths, namely, a plurality of subcarrierSpacing fields, a plurality of carrierBandwidth fields, and the plurality of offsetToCarrier fields.

It should be noted that, in this application, frequency domain resources corresponding to the plurality of second channel bandwidths with the same SCS may or may not overlap. This is not specifically limited in this application. Channel bandwidth configurations in this application may be separately configured for a downlink channel bandwidth and an uplink channel bandwidth, or may be configured only for the downlink channel bandwidth, or may be configured only for the uplink channel bandwidth, or may be configured jointly for the downlink channel bandwidth and the uplink channel bandwidth. This is also not specifically limited in this application.

302: Receive second configuration information from the network device, where the second configuration information is used to configure a plurality of first BWPs, the plurality of first BWPs include at least two second BWPs with a same SCS, and SCSs of the plurality of second BWPs are the same as the SCS corresponding to the second channel bandwidth.

The network device sends the second configuration information to the terminal device, where the second configuration information is used to configure the plurality of first BWPs in the plurality of first channel bandwidths. The second configuration information includes one or more sets of BWP configuration parameters. It should be understood that the BWP configuration parameter includes but is not limited to one or more of the following parameters: a BWP index (or referred to as a BWP identifier or a BWP ID), a frequency domain location of a BWP, a bandwidth of the BWP, an SCS of the BWP, a cyclic prefix (cyclic prefix) of the BWP, another common parameter (for example, a cell-specific parameter), a dedicated parameter (user-specific parameter), a physical transmission channel configuration of the BWP, or a physical channel configuration of the BWP. The terminal device configures, based on the one or more sets of BWP configuration parameters, the first BWPs in first channel bandwidths corresponding to the sets of BWP configuration parameters.

It should be noted that, in this application, a channel bandwidth corresponding to the BWP configuration parameter (or referred to as a channel bandwidth corresponding to the BWP, or a channel bandwidth associated with the BWP) may be understood as that the SCS of the BWP is the same as an SCS of the channel bandwidth. A quantity of BWPs configured in each first channel bandwidth is not limited in this application. That is, a plurality of BWPs may be configured in one first channel bandwidth, or one BWP may be configured in one first channel bandwidth.

The following describes in detail a case in which the second configuration information includes one set of BWP configuration parameters, or the second configuration information includes the plurality of sets of BWP configuration parameters.

Manner 1: The second configuration information includes the plurality of sets of BWP configuration parameters.

SCSs of each of the plurality of sets of BWP configuration parameters may be the same or may be different. That is, the manner is applicable to configuring the first BWP when SCSs of all the plurality of first channel bandwidths are different, or when SCSs of some of the plurality of first channel bandwidths are the same, and SCSs of some of the plurality of first channel bandwidths are different, or when the SCSs of all the plurality of first channel bandwidths are the same.

For example, the plurality of first channel bandwidths include: a channel bandwidth 10, a channel bandwidth 11, a channel bandwidth 12, and a channel bandwidth 13. The channel bandwidth 10 and the channel bandwidth 12 correspond to a same SCS, namely, an SCS 1, the channel bandwidth 11 corresponds to an SCS 2, and the channel bandwidth 13 corresponds to an SCS 3. The second configuration information includes the plurality of sets of BWP configuration parameters. An SCS of a BWP #0 configuration parameter is the SCS 1, an SCS of a BWP #1 configuration parameter is the SCS 2, and an SCS of a BWP #2 configuration parameter is the SCS 3. In the case, after receiving the second configuration information, the terminal device configures the first BWPs in the channel bandwidth 10 and the channel bandwidth 12 based on the BWP #0 configuration parameter when an SCS of the BWP #0 is the same as the SCSs of the channel bandwidth 10 and the channel bandwidth 12; configures the first BWP in the channel bandwidth 11 based on the BWP #1 configuration parameter when an SCS of the BWP #1 is the same as the SCS of the channel bandwidth 11; and configures the first BWP in the channel bandwidth 13 based on the BWP #2 configuration parameter when an SCS of the BWP #2 is the same as the SCS of the channel bandwidth 13.

In the manner of configuring the BWP, because the plurality of first channel bandwidths include the at least two second channel bandwidths with the same SCS, first BWPs configured in the second channel bandwidths with the same SCS are associated, namely, the second BWPs.

Manner 2: The second configuration information includes one set of BWP configuration parameters.

If the second configuration information includes one set of BWP configuration parameters, the terminal device determines, from the plurality of first channel bandwidths based on an SCS of the BWP configuration parameter, a first channel bandwidth that is the same as the SCS of the BWP configuration parameter. Further, the plurality of first BWPs are configured, based on the BWP configuration parameter, in the first channel bandwidth that is the same as the SCS of the BWP configuration parameter.

For example, the plurality of first channel bandwidths include: a channel bandwidth 10, a channel bandwidth 11, a channel bandwidth 12, and a channel bandwidth 13. The channel bandwidth 10 and the channel bandwidth 12 correspond to a same SCS, namely, an SCS 1, the channel bandwidth 11 corresponds to an SCS 2, and the channel bandwidth 13 corresponds to an SCS 3. The second configuration information includes one set of BWP configuration parameters, and the SCS of the BWP configuration parameter is the SCS 1. In this way, the terminal device may determine the BWP in the channel bandwidth 10 and the channel bandwidth 11 based on the second configuration information.

In an application scenario, when the SCSs of all the plurality of first channel bandwidths are the same, the at least two second channel bandwidths with the same SCS may be determined in the plurality of first channel bandwidths by using one set of BWP configuration parameters.

It may be learned that, the manner of configuring the at least two second BWPs with the same SCS is applicable to a case in which at least two second BWPs that are the same as the SCS of the BWP configuration parameter exist in the plurality of first channel bandwidths.

It should be understood that an execution sequence of the foregoing step 301 and step 302 is merely an example for description, and cannot be considered as a specific limitation on this application. That is, the execution sequence of step 301 and step 302 may be: Step 301 is executed first, and then step 302 is executed; or step 302 is executed first, and then step 301 is executed; or step 301 and step 302 are executed at the same time.

FIG. 5 is a schematic flowchart of another communication method according to an embodiment of this application. As shown in FIG. 5, the configuration method includes the following step 501 and step 502. The method shown in FIG. 5 may be performed by a terminal device or a chip in the terminal device, or may be performed by a network device or a chip in the network device. FIG. 5 is described by using an example in which the method is performed by the terminal device and the network device.

501: The terminal device receives third configuration information from the network device, where the third configuration information is used to configure a plurality of first channel bandwidths, and an SCS of each of the plurality of first channel bandwidths is different.

The network device may send the third configuration information to the terminal device by using RRC signaling, where the third configuration information is used to configure the plurality of first channel bandwidths. That an SCS of each of the plurality of first channel bandwidths is different may be understood as that the first channel bandwidths are in a one-to-one correspondence with the SCSs.

For example, the network device sends the third configuration information to the terminal device by using the RRC signaling, where the third configuration information includes configuration information of the plurality of first channel bandwidths shown in FIG. 4. The configuration information of the first channel bandwidth includes: a subcarrierSpacing field indicating an SCS of the first channel bandwidth, a carrierBandwidth field indicating a bandwidth of the first channel bandwidth, and an offsetToCarrier field indicating a frequency domain location (or referred to as a frequency domain starting location or a frequency domain offset) of the first channel bandwidth. Further, the terminal device determines the plurality of first channel bandwidths based on the configuration information of the plurality of first channel bandwidths shown in FIG. 4. For example, the configuration information of the plurality of first channel bandwidths includes: A subcarrierSpacing field indicates an SCS 1, a carrierBandwidth field indicates 30 MHz, and an offsetToCarrier field indicates a location 1; a subcarrierSpacing field indicates an SCS 2, a carrierBandwidth field indicates 50 MHz, and an offsetToCarrier field indicates a location 2; or a subcarrierSpacing field indicates an SCS 3, a carrierBandwidth field indicates 60 MHz, and an offsetToCarrier field indicates a location 3. Further, the terminal device determines, based on the configuration information of the plurality of first channel bandwidths, that an SCS of a channel bandwidth 1 is the SCS 1, a bandwidth is 30 MHz, and a frequency domain location is the location 1; an SCS of a channel bandwidth 2 is the SCS 2, a bandwidth is 50 MHz, and a frequency domain location is the location 2; and an SCS of a channel bandwidth 3 is the SCS 3, a bandwidth is 60 MHz, and a frequency domain location is the location 3.

502: The terminal device receives fourth configuration information from the network device, where the fourth configuration information is used to configure a plurality of first BWPs, the plurality of first BWPs are associated with the plurality of first channel bandwidths, and the plurality of first BWPs include at least two second BWPs with a same SCS.

The network device sends the fourth configuration information to the terminal device, where the fourth configuration information is used to configure the plurality of first BWPs in the plurality of first channel bandwidths. The fourth configuration information includes one or more sets of BWP configuration parameters. The configuration parameter includes but is not limited to one or more of the following parameters: a BWP index (or referred to as a BWP identifier or a BWP ID), a frequency domain location of a BWP, a bandwidth of the BWP, an SCS of the BWP, a cyclic prefix (cyclic prefix) of the BWP, another common parameter (for example, a cell-specific parameter), a dedicated parameter (user-specific parameter), a physical transmission channel configuration of the BWP, or a physical channel configuration of the BWP. The terminal device configures, based on the one or more sets of BWP configuration parameters, the first BWPs in first channel bandwidths corresponding to the sets of BWP configuration parameters. It should be understood that when an SCS of the BWP configuration parameter is the same as an SCS of a channel bandwidth, one or more BWPs may be configured in the channel bandwidth based on the BWP configuration parameter.

For example, the plurality of first channel bandwidths include: a channel bandwidth 20, a channel bandwidth 21, and a channel bandwidth 22, where the channel bandwidth 20 corresponds to the SCS 1, the channel bandwidth 21 corresponds to the SCS 2, the channel bandwidth 22 corresponds to the SCS 3, and the SCS 1, the SCS 2, and the SCS 3 are different from each other. The fourth configuration information includes a plurality of sets of first BWP configuration parameters. An SCS of a BWP #0 configuration parameter is the SCS 1, an SCS of a BWP #1 configuration parameter is the SCS 2, and an SCS of a BWP #2 configuration parameter is the SCS 3. Further, the terminal device determines one or more BWPs #0 in the channel bandwidth 20, determines one or more BWPs #1 in the channel bandwidth 21, and determines one or more BWPs #2 in the channel bandwidth 22.

In an application scenario, because a plurality of BWPs may be configured in the first channel bandwidth, SCSs of BWPs configured in a same channel bandwidth are the same, namely, the second BWPs. Because the first channel bandwidth is configured by the network device based on a bandwidth capability of the terminal device, the first channel bandwidth is limited by the bandwidth capability of the terminal device. When a frequency domain resource range of the second BWP exceeds a frequency domain of a first channel bandwidth corresponding to the second BWP, to avoid that the second BWP is limited by the bandwidth capability of the terminal device, the terminal device (or the network device) determines a fourth channel bandwidth, where a frequency domain range of the fourth channel bandwidth includes the frequency domain resource range of the second BWP.

It should be understood that, in this application, a method for determining the channel bandwidth based on the BWP is used as an example for description only when the frequency domain resource range of the second BWP exceeds a frequency domain resource range of the first channel bandwidth corresponding to the second BWP, and should not be considered as a specific limitation on this application. That is, it may be understood as that when a frequency domain range of the first BWP exceeds a frequency domain resource range of a first channel bandwidth corresponding to the first BWP, a channel bandwidth including the frequency domain range of the first BWP may still be determined by using the method for determining the channel bandwidth based on the BWP.

For example, if an SCS of the channel bandwidth 20 is the same as the SCS of the BWP #0 configuration parameter, the channel bandwidth 20 is a first channel bandwidth corresponding to the BWP #0, and at least one BWP #0 is configured in the channel bandwidth 20 based on the BWP #0 configuration parameter. The at least one BWP #0 includes a BWP #$0_1$ and a BWP #$0_2$. The terminal device (or the network device) determines the fourth channel bandwidth when a frequency domain resource range of the BWP #$0_2$ exceeds a frequency domain resource range of the channel bandwidth 20, where the fourth channel bandwidth includes a frequency domain resource of the BWP #$0_2$.

In an optional implementation, the fourth channel bandwidth meets one or more of the following conditions:

(a) A frequency domain resource starting location of the fourth channel bandwidth is the same as a frequency domain resource starting location of the second BWP. It may be understood as that the fourth channel bandwidth is determined based on the frequency domain resource starting location of the second BWP, and a size of the fourth channel bandwidth includes at least a frequency domain resource of the second BWP.

(b) An SCS of the fourth channel bandwidth is the same as an SCS of the second BWP. It may be understood as that the SCS of the fourth channel bandwidth is determined based on the SCS of the second BWP, and the size of the fourth channel bandwidth includes at least the frequency domain resource of the second BWP.

(c) The size of the fourth channel bandwidth is the same as a size of the first channel bandwidth corresponding to the second BWP. For example, the BWP #$0_2$ is configured in the channel bandwidth 20 based on the BWP #0 configuration parameter. The fourth channel bandwidth is determined when the frequency domain resource range of the BWP #$0_2$ exceeds the frequency domain resource range of the channel bandwidth 20, where a bandwidth of the fourth channel bandwidth is the same as a bandwidth of the channel bandwidth 20.

(d) A relative location of the second BWP and the fourth channel bandwidth is the same as a relative location of a fourth BWP and the first channel bandwidth corresponding to the second BWP, where an SCS of the second BWP is the same as an SCS of the fourth BWP. For example, if the SCS of the channel bandwidth 20 is the same as the SCS of the BWP #0 configuration parameter, the channel bandwidth 20 is a first channel bandwidth corresponding to the BWP #0, and at least one BWP #0 is configured in the channel bandwidth 20 based on the BWP #0 configuration parameter. The at least one BWP #0 includes the BWP #$0_1$ and the BWP #$0_2$. The terminal device (or the network device) determines the fourth channel bandwidth when the frequency domain resource range of the BWP #$0_2$ exceeds the frequency domain resource range of the channel bandwidth 20, and a relative location of the BWP #02 and the fourth channel bandwidth is the same as a relative location of the BWP #$0_1$ and the channel bandwidth 20.

It may be learned that, in the manner, the at least two second BWPs with the same SCS are configured, so that when a plurality of associated BWPs are determined, in a manner of determining the channel bandwidth based on the BWP, the BWP is not limited by a frequency domain range of a channel bandwidth corresponding to the BWP, to avoid that a BWP of the terminal device is limited by the bandwidth capability of the terminal device, and improve a frequency selective scheduling gain and/or a frequency diversity gain of the terminal device.

It should be understood that an execution sequence of the foregoing step 501 and step 502 is merely an example for description, and cannot be considered as a specific limitation on this application. That is, the execution sequence of step 501 and step 502 may be: Step 501 is executed first, and then step 502 is executed; or step 502 is executed first, and then step 501 is executed; or step 501 and step 502 are executed at the same time.

Based on the configuration method provided in FIG. 3 or FIG. 5, in an optional implementation, the terminal device may further receive control information from the network device, where the control information indicates a fifth BWP activated at a first moment. Further, when the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with the sixth BWP, a switching delay of the terminal device switching from the sixth BWP to the fifth BWP is a second switching delay, where the first switching delay is less than the second switching delay, and the fifth BWP is different from the sixth BWP.

For example, an active BWP used by the terminal device for data transmission at a current moment (namely, the second moment) is a BWP 1 (namely, the sixth BWP). The terminal device receives the control information from the network device, where the control information indicates the fifth BWP activated at the first moment after the second moment, and the control information carries a BWP identifier (or a sub-identifier) of the fifth BWP. Further, when the fifth BWP is associated with the sixth BWP, the switching delay of the terminal device switching from the sixth BWP to the fifth BWP is the first switching delay; or when the fifth BWP is not associated with the sixth BWP, the switching delay of the terminal device switching from the sixth BWP to the fifth BWP is the second switching delay, where the first switching delay is less than the second switching delay. That is, it may be understood as that a switching delay of the terminal device switching between two associated BWPs is less than a switching delay of the terminal device switching between two unassociated BWPs.

For a case in which two BWPs are associated, it should be noted that when the fifth BWP is associated with the sixth BWP, the fifth BWP and the sixth BWP meet one or more of the following conditions:

(a) A bandwidth of the fifth BWP is the same as a bandwidth of the sixth BWP. For example, if the bandwidth of the fifth BWP is 20 MHz, and the bandwidth of the sixth BWP is also 20 MHz, it is considered that the fifth BWP is associated with the sixth BWP.

(b) An SCS of the fifth BWP is the same as an SCS of the sixth BWP. For example, if both the SCS of the fifth BWP and the SCS of the sixth BWP are the SCS 1, it is considered that the fifth BWP is associated with the sixth BWP.

(c) A physical transmission channel configuration of the fifth BWP is the same as a physical transmission channel configuration of the sixth BWP. It should be understood that the physical transmission channel configuration includes but is not limited to a PDCCH configuration, a PDSCH configuration, a PUCCH configuration, or a PUSCH configuration. For example, if a transmission configuration (where the transmission configuration includes but is not limited to a transmission speed) of a PDCCH of the fifth BWP is the same as a transmission configuration of a PDCCH of the sixth BWP, it is considered that the fifth BWP is associated with the sixth BWP.

(d) A physical signal configuration of the fifth BWP is the same as a physical signal configuration of the sixth BWP. It should be understood that the physical signal configuration includes but is not limited to a modulation reference signal (demodulation reference signal, DMRS) configuration, a channel state information reference signal (channel state information reference signal, CSI-RS) configuration, a tracking reference signal (tracking reference signal, TRS) configuration, a sounding reference signal (sounding reference signal, SRS) configuration, and the like. For example, if a DMRS configuration of the fifth BWP is the same as a DMRS configuration of the sixth BWP, it is considered that the fifth BWP is associated with the sixth BWP.

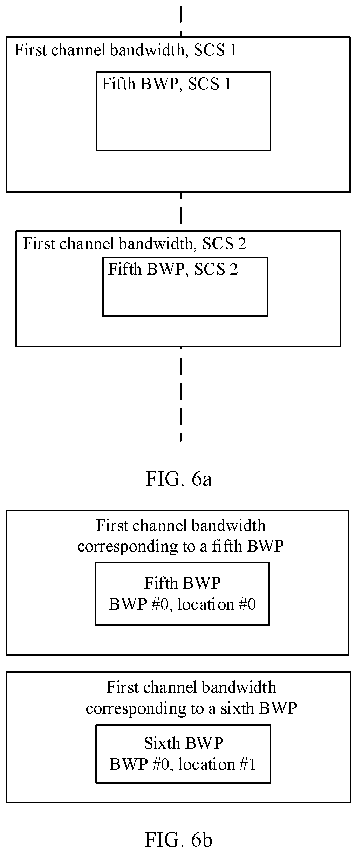

(e) A relative location of the fifth BWP in a first channel bandwidth corresponding to the fifth BWP is the same as a relative location of the sixth BWP in a first channel bandwidth corresponding to the sixth BWP. The relative location of the BWP and the channel bandwidth is a relative location between a frequency domain resource center location of the BWP and a frequency domain resource center location of the channel bandwidth, or a relative location between a frequency domain resource starting location of the BWP and a frequency domain resource starting location of the channel bandwidth, or a frequency domain resource offset (offset) of the BWP. Refer to FIG. 6a. For example, if a frequency domain resource of the fifth BWP is located at a frequency domain resource center location of the first channel bandwidth corresponding to the fifth BWP (that is, a frequency domain resource center location of the fifth BWP overlaps the frequency domain resource center location of the first channel bandwidth), and a frequency domain resource of the sixth BWP is also located at a frequency domain resource center location of the first channel bandwidth corresponding to the sixth BWP (that is, a frequency domain resource center location of the sixth BWP overlaps the frequency domain resource center location of the first channel bandwidth), it is considered that the fifth BWP is associated with the sixth BWP.

(f) An identifier of the fifth BWP is the same as an identifier of the sixth BWP, and a sub-identifier of the identifier corresponding to the fifth BWP is different from a sub-identifier of the identifier corresponding to the sixth BWP. Refer to FIG. 6b. For example, a plurality of BWPs with only different frequency domain resource locations correspond to a same BWP identifier, and each BWP has a sub-identifier of the BWP identifier. In the case, both a BWP identifier of the fifth BWP and a BWP identifier of the sixth BWP are the BWP #0, the sub-identifier of the fifth BWP is a location #0, and the sub-identifier of the sixth BWP is a location #1. In the case, it may be considered that the fifth BWP is different from the sixth BWP, and the fifth BWP is associated with the sixth BWP.

For the switching delay between the two associated BWPs and the switching delay between the two unassociated BWPs, it should be noted that, because manners of triggering BWP switching are different, specific manners of determining a BWP switching delay are different. For example, the following describes the first switching delay and the second switching delay in detail when the BWP switching delay is classified into a BWP switching delay triggered based on physical layer signaling and a BWP switching delay triggered based on the RRC signaling.

(1) BWP switching delay triggered based on physical layer signaling

If the BWP switching delay is triggered based on the physical layer signaling, for the switching delay (namely, the second switching delay) between the two unassociated BWPs, refer to Table 1, and for the switching delay (namely, the first switching delay) between the two associated BWPs, refer to Table 2.

**Table 2**

| $\mu$ | NR slot length (ms) | BWP switching delay (slots) | |
| --- | --- | --- | --- |
| | | Type 1 | Type 2 |
| 0 | 1 | <1 | <3 |
| 1 | 0.5 | <2 | <5 |
| 2 | 0.25 | <3 | <9 |
| 3 | 0.125 | <6 | <18 |

$\mu$ corresponds to different SCSs. Specifically: when $\mu$ is 0, a corresponding SCS is 15 kHz; when $\mu$ is 1, a corresponding SCS is 30 kHz; when $\mu$ is 2, a corresponding SCS is 60 kHz; and when $\mu$ is 3, a corresponding SCS is 120 kHz. The type 1 and the type 2 of the BWP switching delay are determined based on a reporting capability of the terminal device. For example, if the reporting capability of the terminal device supports only the type 1 of the BWP switching delay, a delay corresponding to BWP switching triggered based on a physical layer is shown in the type 1 in Table 1. If the reporting capability of the terminal device supports only the type 2, the delay corresponding to the BWP switching triggered based on the physical layer is shown in the type 2 in Table 1.

In the case, when the reporting capability of the terminal device is that the terminal device supports only the type 1, and $\mu$ is 1, it may be determined, based on Table 1, that a switching delay (namely, the second switching delay) of the terminal device switching between the two unassociated BWPs is two slots, and it may be determined, based on Table 2, that a switching delay (namely, the first switching delay) of the terminal device switching between the two associated BWPs is less than two slots. When the reporting capability of the terminal device is that the terminal device supports only the type 2, and $\mu$ is 1, it may be determined, based on Table 1, that the switching delay (namely, the second switching delay) of the terminal device switching between the two unassociated BWPs is five slots, and it may be determined, based on Table 2, that the switching delay (namely, the first switching delay) of the terminal device switching between the two associated BWPs is less than five slots.

(2) BWP switching delay triggered based on RRC signaling

It may be learned according to the formula (1) that, in the case, the BWP switching delay includes two parts: $T_{RRCprocessingDelay}$, that is a delay introduced in an RRC process; and $T_{BWPswitchDelayRRC}$, that is time required by UE to perform BWP switching. That the first switching delay of the terminal device switching between two associated BWPs is less than the second switching delay of the terminal device switching between two unassociated BWPs is specifically represented as: $T_{RRCprocessingDelay}$ of the terminal device switching between the two associated BWPs is less than $T_{RRCprocessingDelay}$ of the terminal device switching between the two unassociated BWPs; or $T_{BWPswitchDelayRRC}$ of the terminal device switching between the two associated BWPs is less than $T_{BWPswitchDelayRRC}$ of the terminal device switching between the two unassociated BWPs.

It should be understood that when the fifth BWP is associated with the sixth BWP, the at least two second BWPs with the same SCS include the fifth BWP and the sixth BWP. That is, it may be understood as that the at least two second BWPs with the same SCS are associated with each other.

In a possible implementation, the plurality of first channel bandwidths include a default (default) channel bandwidth. In an application scenario, the default channel bandwidth is used to determine the default (default) channel bandwidth as an initial operating channel bandwidth and/or a corresponding BWP when the terminal device receives configuration information of a plurality of channel bandwidths. In another application scenario, when the terminal device does not perform data transmission on a currently operating BWP for a long time, the terminal device may switch back to the default channel bandwidth and/or a corresponding default BWP.

The default channel bandwidth may be pre-specified according to a communication protocol, or may be determined according to an indication of the network device (for example, through a signaling indication). In an optional implementation, the terminal device receives indication information and the second configuration information from the network device, determines the default channel bandwidth from the at least two second channel bandwidths with the same SCS based on the indication information, and determines a BWP in a valid state from the default channel bandwidth based on the BWP configuration parameter included in the second configuration information. In another optional implementation, after determining the fourth channel bandwidth in the manner shown in FIG. 5, the terminal device (or the network device) determines the default channel bandwidth in a first channel bandwidth that is the same as the SCS of the fourth channel bandwidth and the fourth channel bandwidth.

For example, in an application scenario, the plurality of first channel bandwidths include: the channel bandwidth 10, the channel bandwidth 11, the channel bandwidth 12, and the channel bandwidth 13. The channel bandwidth 10 and the channel bandwidth 12 correspond to the same SCS, namely, the SCS 1, the channel bandwidth 11 corresponds to the SCS 2, and the channel bandwidth 13 corresponds to the SCS 3. The second configuration information includes the plurality of sets of BWP configuration parameters. The SCS of the BWP #0 configuration parameter is the SCS 1, the SCS of the BWP #1 configuration parameter is the SCS 2, and the SCS of the BWP #2 configuration parameter is the SCS 3. It may be learned that, in the application scenario, the second channel bandwidth includes the channel bandwidth 10 and the channel bandwidth 12. The default channel bandwidth is determined as the channel bandwidth 10 according to the indication of the network device. In the case, although the SCS of the BWP #0 configuration parameter is the same as the SCS of the channel bandwidth 12, the terminal device does not determine the BWP #0 in the channel bandwidth 12 based on the BWP #0 configuration parameter. The terminal device determines the BWP #0 only in the channel bandwidth 10 (the default channel bandwidth) based on the BWP #0 configuration parameter (where the SCS in the configuration parameter is the SCS 1) in the second configuration information.

In the manner, a case in which a resource waste caused by operation of a plurality of channel bandwidths at the same time may be reduced in the application scenario, and flexibility of determining the BWP is also improved.

In an optional implementation, the terminal device receives the indication information from the network device, where the indication information indicates that one of the at least two second BWPs with the same SCS is in the valid state. In other words, after the terminal device determines the plurality of first BWPs by using the first configuration information and the second configuration information, and the plurality of first BWPs include the at least two second BWPs with the same SCS, the terminal device can determine only one second BWP from the at least two second BWPs with the same SCS as a candidate for the active BWP, and remaining second BWPs are in an invalid state (where when the second BWP is in the invalid state, it may be simply understood as that the second BWP is not determined based on the second configuration information).

In conclusion, the plurality of associated BWPs may be configured for the terminal device by using the configuration method. The switching delay of the terminal device switching between the two associated BWPs is less than the switching delay of the terminal device switching between the two unassociated BWPs, so that a BWP switching delay of the terminal device is reduced.

It should be noted that in a specific implementation, some steps in the accompanying drawings may be selected for implementation, or a sequence of the steps in the figure may be adjusted for implementation. This is not limited in this application. It should be understood that performing some steps in the figure or adjusting a sequence of the steps for a specific implementation shall fall within the protection scope of this application.

In the foregoing embodiments provided in this application, the methods provided in embodiments of this application are separately described from a perspective of interaction between devices. The steps performed by the access network device may also be separately implemented by different communication apparatuses. When a network architecture includes one or more distributed units (distributed units, DUs), one or more central units (central units, CUs), and one or more radio frequency units (RUs), the steps performed by the access network device may be separately implemented by the DU, the CU, and the RU.

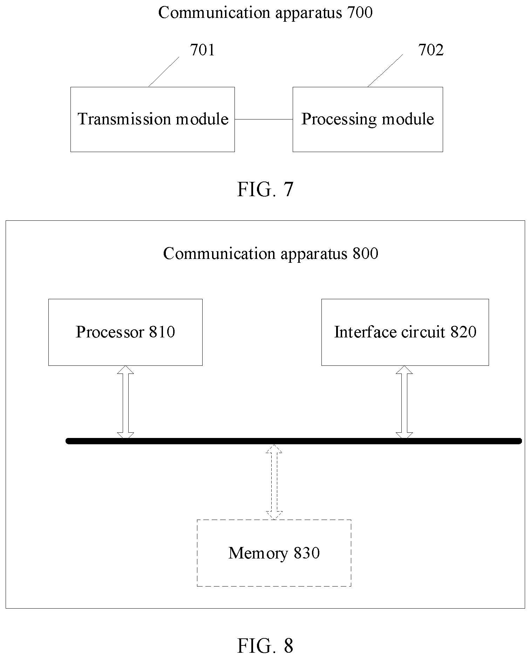

FIG. 7 is a schematic diagram of a structure of a communication apparatus 700 according to an embodiment of this application. The communication apparatus shown in FIG. 7 may be configured to implement a part of or all functions of the terminal device in the embodiments corresponding to the foregoing configuration methods, or the communication apparatus shown in FIG. 7 may be configured to implement a part of or all functions of the network device in the embodiments corresponding to the foregoing configuration methods.

In an embodiment, the communication apparatus shown in FIG. 7 may be configured to implement a part of or all functions of the terminal device in the method embodiment described in FIG. 3 or FIG. 5. The apparatus may be a terminal device, an apparatus in the terminal device, or an apparatus that can be matched and used with the terminal device. The communication apparatus may alternatively be a chip system. The communication apparatus shown in FIG. 7 may include a transmission module 701 and a processing module 702.

The transmission module 701 is configured to: receive first configuration information from a network device, where the first configuration information is used to configure a plurality of first channel bandwidths, and the plurality of first channel bandwidths include at least two second channel bandwidths with a same subcarrier spacing SCS; and receive second configuration information from the network device, where the second configuration information is used to configure a plurality of first bandwidth parts BWPs, the plurality of first BWPs include at least two second BWPs with a same SCS, and the SCS of the second BWP is the same as the SCS corresponding to the second channel bandwidth.

In an optional implementation, the first configuration information includes first sub-configuration information, or first sub-configuration information and second sub-configuration information, where the first sub-configuration information is used to configure the at least two second channel bandwidths with the same SCS; or the second sub-configuration information is used to configure a third channel bandwidth other than the second channel bandwidth.

In an optional implementation, the first sub-configuration information includes one or more of at least two frequency domain locations, at least two frequency domain starting locations, or at least two frequency domain offsets corresponding to the at least two second channel bandwidths with the same SCS.

In an optional implementation, the first configuration information includes at least two frequency domain locations, and each frequency domain location indicates a location of the first channel bandwidth.

In an embodiment, the transmission module 701 is configured to: receive third configuration information from a network device, where the third configuration information is used to configure a plurality of first channel bandwidths, and each of the plurality of first channel bandwidths corresponds to different subcarrier spacing SCSs; and receive fourth configuration information from the network device, where the fourth configuration information is used to configure a plurality of first BWPs, the plurality of first BWPs are associated with the plurality of first channel bandwidths, and the plurality of first BWPs include at least two second BWPs with a same SCS.

In an optional implementation, the processing module 702 is configured to determine a fourth channel bandwidth when a frequency domain resource range of the second BWP exceeds a frequency domain resource range of a first channel bandwidth corresponding to the second BWP, where a frequency domain resource range of the fourth channel bandwidth includes the frequency domain resource range of the second BWP.

In an optional implementation, the fourth channel bandwidth meets one or more of the following conditions: a frequency domain resource starting location of the fourth channel bandwidth is the same as a frequency domain resource starting location of the second BWP; an SCS of the fourth channel bandwidth is the same as an SCS of the second BWP; a size of the fourth channel bandwidth is the same as a size of the first channel bandwidth corresponding to the second BWP; or a relative location of the second BWP and the fourth channel bandwidth is the same as a relative location of a fourth BWP and the first channel bandwidth corresponding to the second BWP, where an SCS of the fourth BWP is the same as the SCS of the second BWP.

In an optional implementation, the transmission module 701 is configured to receive indication information from the network device, where the indication information indicates that one of the at least two second BWPs with the same SCS is in a valid state.

In an optional implementation, the transmission module 701 is configured to receive control information from the network device, where the control information indicates a fifth BWP activated at a first moment; when the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with a sixth BWP, a switching delay of the terminal device switching from the sixth BWP to the fifth BWP is a second switching delay, where the first switching delay is less than the second switching delay, and the fifth BWP is different from the sixth BWP. The optional implementation is implemented, so that a switching delay of the terminal device switching between two associated BWPs is less than a switching delay of the terminal device switching between two unassociated BWPs.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP.

In an optional implementation, when the fifth BWP is associated with the sixth BWP, the at least two second BWPs with the same SCS include the fifth BWP and the sixth BWP.

For more detailed descriptions of the transmission module 701 and the processing module 702, refer to related descriptions in the foregoing method embodiments. Details are not described herein again.

In another embodiment, the communication apparatus shown in FIG. 7 may be configured to implement a part of or all functions of the network device in the method embodiment described in FIG. 3 or FIG. 5. The apparatus may be a network device, may be an apparatus in the network device, or may be an apparatus that can be matched and used with the network device. The communication apparatus may alternatively be a chip system. The communication apparatus shown in FIG. 7 may include a transmission module 701 and a processing module 702.

The transmission module 701 is configured to: send first configuration information to a terminal device, where the first configuration information is used to configure a plurality of first channel bandwidths, and the plurality of first channel bandwidths include at least two second channel bandwidths with a same subcarrier spacing SCS; and send second configuration information to the terminal device, where the second configuration information is used to configure a plurality of first bandwidth parts BWPs, the plurality of first BWPs include at least two second BWPs with a same SCS, and the SCS of the second BWP is the same as the SCS corresponding to the second channel bandwidth.

In a possible implementation, the first configuration information includes first sub-configuration information, or first sub-configuration information and second sub-configuration information, where the first sub-configuration information is used to configure the at least two second channel bandwidths with the same SCS; or the second sub-configuration information is used to configure a third channel bandwidth other than the second channel bandwidth.

In a possible implementation, the first sub-configuration information includes one or more of at least two frequency domain locations, at least two frequency domain starting locations, or at least two frequency domain offsets corresponding to the at least two second channel bandwidths with the same SCS.

In a possible implementation, the first configuration information includes at least two frequency domain locations, and each frequency domain location indicates a location of the first channel bandwidth.

In an embodiment, the transmission module 701 is configured to: send third configuration information to a terminal device, where the third configuration information is used to configure a plurality of first channel bandwidths, and each of the plurality of first channel bandwidths corresponds to a different subcarrier spacing SCS; and send fourth configuration information to the terminal device, where the fourth configuration information is used to configure a plurality of first BWPs, the plurality of first BWPs are associated with the plurality of first channel bandwidths, and the plurality of first BWPs include at least two second BWPs with a same SCS.

In a possible implementation, a fourth channel bandwidth is determined when a frequency domain resource range of the first BWP exceeds a frequency domain range of a first channel bandwidth corresponding to the first BWP, where a frequency domain resource range of the fourth channel bandwidth includes the frequency domain resource range of the first BWP.

In an optional implementation, the fourth channel bandwidth meets one or more of the following conditions: a frequency domain resource starting location of the fourth channel bandwidth is the same as a frequency domain resource starting location of the first BWP; an SCS of the fourth channel bandwidth is the same as an SCS of the first BWP; a size of the fourth channel bandwidth is the same as a size of the first channel bandwidth corresponding to the first BWP; or a relative location of the first BWP and the fourth channel bandwidth is the same as a relative location of a fourth BWP and the first channel bandwidth corresponding to the first BWP, where an SCS of the fourth BWP is the same as an SCS of the first BWP.

In a possible implementation, the transmission module 701 is configured to send indication information to the terminal device, where the indication information indicates that a second BWP of the at least two first BWPs with a same SCS is in a valid state.

In a possible implementation, the transmission module 701 is configured to send control information to the terminal device, where the control information indicates a fifth BWP activated at a first moment, and the second configuration information includes configuration information of the fifth BWP. When the fifth BWP is associated with a sixth BWP, a switching delay of the terminal device switching from the sixth BWP to the fifth BWP is a first switching delay, the sixth BWP is a BWP activated at a second moment, and the second moment is before the first moment; or when the fifth BWP is not associated with a sixth BWP, a switching delay of the terminal device switching from the sixth BWP to the fifth BWP is a second switching delay, where the first switching delay is less than the second switching delay, and the fifth BWP is different from the sixth BWP.

In an optional implementation, when the fifth BWP is associated with the sixth BWP, the fifth BWP and the sixth BWP meet one or more of the following conditions: a bandwidth of the fifth BWP is the same as a bandwidth of the sixth BWP; an SCS of the fifth BWP is the same as an SCS of the sixth BWP; a physical transmission channel configuration of the fifth BWP is the same as a physical transmission channel configuration of the sixth BWP; a physical signal configuration of the fifth BWP is the same as a physical signal configuration of the sixth BWP; a relative location of the fifth BWP in a first channel bandwidth corresponding to the fifth BWP is the same as a relative location of the sixth BWP in a first channel bandwidth corresponding to the sixth BWP; or an identifier of the fifth BWP is the same as an identifier of the sixth BWP, and a sub-identifier of the identifier corresponding to the fifth BWP is different from a sub-identifier of the identifier corresponding to the sixth BWP. In an optional implementation, when the fifth BWP is associated with the sixth BWP, the at least two second BWPs with the same SCS include the fifth BWP and the sixth BWP.

For more detailed descriptions of the transmission module 701 and the processing module 702, refer to related descriptions in the foregoing method embodiments. Details are not described herein again.

FIG. 8 is a schematic diagram of a structure of a communication apparatus 800 according to this application. The communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830. The memory 830 is configured to: store instructions executed by the processor 810, store input data required for running instructions by the processor 810, or store data generated after the processor 810 runs instructions.

When the communication apparatus 800 is configured to implement the methods in the foregoing method embodiments, the processor 810 is configured to perform a function of the processing module 702, and the interface circuit 820 is configured to perform a function of the transmission module 701.

When the communication apparatus is a chip used in a terminal device, the chip of the terminal device implements a function of the terminal device in the foregoing method embodiments. The chip of the terminal device receives information from another module (for example, a radio frequency module or an antenna) of the terminal device, where the information is sent by a network device to the terminal device. Alternatively, the chip of the terminal device sends information to another module (for example, a radio frequency module or an antenna) of the terminal device, where the information is sent by the terminal device to a network device.

When the communication apparatus is a chip used in the network device, the chip of the network device implements a function of the network device in the foregoing method embodiments. The chip of the network device receives information from another module (for example, a radio frequency module or an antenna) of the network device, where the information is sent by a terminal device to the network device. Alternatively, the chip of the network device sends information to another module (for example, a radio frequency module or an antenna) of the network device, where the information is sent by the network device to a terminal device.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The steps of the methods in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium, and write information into the storage medium. Certainly, the storage medium may alternatively be a component of the processor. The processor and the storage medium may be located in the ASIC. In addition, the ASIC may be located in the access network device or the terminal device. Certainly, the processor and the storage medium may alternatively exist in the access network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer program or instructions are loaded and executed on a computer, all or a part of the procedures or functions in embodiments of this application are performed. The computer may be a general-purpose computer, a dedicated computer, a computer network, or another programmable apparatus. The computer program or instructions may be stored in a computer-readable storage medium, or may be transmitted through the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid state disk (solid state disk, SSD).

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device in the foregoing method embodiments is implemented.

An embodiment of this application further provides a computer-readable storage medium. The computer-readable storage medium stores computer-executable instructions. When the computer-executable instructions are executed, the method performed by the network device in the foregoing method embodiments is implemented.

An embodiment of this application further provides a computer program product. The computer program product includes a computer program. When the computer program is executed, the method performed by the terminal device in the foregoing method embodiments is implemented.

An embodiment of this application further provides a computer program product. The computer program product includes a computer program. When the computer program is executed, the method performed by the network device in the foregoing method embodiments is implemented.

An embodiment of this application further provides a communication system. The communication system includes a terminal device or a network device. The terminal device is configured to perform the method performed by the terminal device in the foregoing method embodiments. The network device is configured to perform the method performed by the network device in the foregoing method embodiments.

It should be noted that for ease of brief description, the foregoing method embodiments are represented as a series of action combinations. However, a person skilled in the art should appreciate that this application is not limited to the described order of the actions, because according to this application, some steps may be performed in another order or at the same time. It should be further appreciated by a person skilled in the art that embodiments described in this specification all belong to preferred embodiments, and the related actions and modules are not necessarily required by this application.

Cross reference may be made to the descriptions of embodiments provided in this application, and the descriptions of embodiments have respective focuses. For a part not described in detail in an embodiment, refer to related descriptions in another embodiment. For ease and brevity of description, for example, for functions and performed steps of the apparatuses and devices provided in embodiments of this application, refer to related descriptions of the method embodiments of this application. The method embodiments and the apparatus embodiments may also be referenced, combined, or cited to each other.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof, without departing from the scope of the technical solutions of embodiments of this application.

**Claims**

1. A configuration method, wherein the method comprises:

   receiving first configuration information from a network device, wherein the first configuration information is used to configure a plurality of first channel bandwidths, and the plurality of first channel bandwidths comprise at least two second channel bandwidths with a same subcarrier spacing SCS; and
   receiving second configuration information from the network device, wherein the second configuration information is used to configure a plurality of first bandwidth parts BWPs, the plurality of first BWPs comprise at least two second BWPs with a same SCS, and the SCS of the second BWP is the same as the SCS corresponding to the second channel bandwidth.

2. The method according to claim 1, wherein

   the first configuration information comprises first sub-configuration information, or first sub-configuration information and second sub-configuration information, wherein
   the first sub-configuration information is used to configure the at least two second channel bandwidths with the same SCS; or
   the second sub-configuration information is used to configure a third channel bandwidth other than the second channel bandwidth.

3. The method according to claim 2, wherein
   the first sub-configuration information comprises one or more of at least two frequency domain locations, at least two frequency domain starting locations, or at least two frequency domain offsets corresponding to the at least two second channel bandwidths with the same SCS.

4. The method according to claim 1, wherein

the first configuration information comprises at least two frequency domain locations, and each frequency domain location indicates a location of the first channel bandwidth.

5. A configuration method, wherein the method comprises:

receiving third configuration information from a network device, wherein the third configuration information is used to configure a plurality of first channel bandwidths, and each of the plurality of first channel bandwidths corresponds to a different subcarrier spacing SCS; and

receiving fourth configuration information from the network device, wherein the fourth configuration information is used to configure a plurality of first BWPs, the plurality of first BWPs are associated with the plurality of first channel bandwidths, and the plurality of first BWPs comprise at least two second BWPs with a same SCS.

6. The method according to claim 5, wherein the method further comprises:
determining a fourth channel bandwidth when a frequency domain resource range of the second BWP exceeds a frequency domain resource range of a first channel bandwidth corresponding to the second BWP, wherein a frequency domain resource range of the fourth channel bandwidth comprises the frequency domain resource range of the second BWP.

7. The method according to claim 6, wherein the fourth channel bandwidth meets one or more of the following conditions:

a frequency domain resource starting location of the fourth channel bandwidth is the same as a frequency domain resource starting location of the second BWP;

an SCS of the fourth channel bandwidth is the same as an SCS of the second BWP;

a size of the fourth channel bandwidth is the same as a size of the first channel bandwidth corresponding to the second BWP; or

a relative location of the second BWP and the fourth channel bandwidth is the same as a relative location of a fourth BWP and the first channel bandwidth corresponding to the second BWP, wherein an SCS of the fourth BWP is the same as an SCS of the second BWP.

8. The method according to any one of claims 1 to 7, wherein the method further comprises:
receiving indication information from the network device, wherein the indication information indicates that one of the at least two second BWPs with the same SCS is in a valid state.

9. The method according to any one of claims 1 to 8, wherein the method further comprises:

receiving control information from the network device, wherein the control information indicates a fifth BWP activated at a first moment; and

when the fifth BWP is associated with a sixth BWP, a switching delay of switching from the sixth BWP to the fifth BWP is a first switching delay, the sixth BWP is a BWP activated at a second moment, and the second moment is before the first moment; or

when the fifth BWP is not associated with a sixth BWP, a switching delay of switching from the sixth BWP to the fifth BWP is a second switching delay, wherein

the first switching delay is less than the second switching delay, and the fifth BWP is different from the sixth BWP.

10. The method according to claim 9, wherein when the fifth BWP is associated with the sixth BWP, the fifth BWP and the sixth BWP meet one or more of the following conditions:

a bandwidth of the fifth BWP is the same as a bandwidth of the sixth BWP;

an SCS of the fifth BWP is the same as an SCS of the sixth BWP;

a physical transmission channel configuration of the fifth BWP is the same as a physical transmission channel configuration of the sixth BWP;

a physical signal configuration of the fifth BWP is the same as a physical signal configuration of the sixth BWP;

a relative location of the fifth BWP in a first channel bandwidth corresponding to the fifth BWP is the same as a relative location of the sixth BWP in a first channel bandwidth corresponding to the sixth BWP; or

an identifier of the fifth BWP is the same as an identifier of the sixth BWP, and a sub-identifier of the identifier corresponding to the fifth BWP is different from a sub-identifier of the identifier corresponding to the sixth BWP.

11. The method according to claim 9 or 10, wherein when the fifth BWP is associated with the sixth BWP, the at least two second BWPs with the same SCS comprise the fifth BWP and the sixth BWP.

**12.** A configuration method, wherein the method comprises:

sending first configuration information to a terminal device, wherein the first configuration information is used to configure a plurality of first channel bandwidths, and the plurality of first channel bandwidths comprise at least two second channel bandwidths with a same subcarrier spacing SCS; and
sending second configuration information to the terminal device, wherein the second configuration information is used to configure a plurality of first bandwidth parts BWPs, the plurality of first BWPs comprise at least two second BWPs with a same SCS, and the SCS of the second BWP is the same as the SCS corresponding to the second channel bandwidth.

**13.** The method according to claim 12, wherein

the first configuration information comprises first sub-configuration information, or first sub-configuration information and second sub-configuration information, wherein
the first sub-configuration information is used to configure the at least two second channel bandwidths with the same SCS; or
the second sub-configuration information is used to configure a third channel bandwidth other than the second channel bandwidth.

**14.** The method according to claim 13, wherein
the first sub-configuration information comprises one or more of at least two frequency domain locations, at least two frequency domain starting locations, or at least two frequency domain offset corresponding to the at least two second channel bandwidths with the same SCS.

**15.** The method according to claim 12, wherein
the first configuration information comprises at least two frequency domain locations, and each frequency domain location indicates a location of the first channel bandwidth.

**16.** A configuration method, wherein the method comprises:

sending third configuration information to a terminal device, wherein the third configuration information is used to configure a plurality of first channel bandwidths, and each of the plurality of first channel bandwidths corresponds to a different subcarrier spacing SCS; and
sending fourth configuration information to the terminal device, wherein the fourth configuration information is used to configure a plurality of first BWPs, the plurality of first BWPs are associated with the plurality of first channel bandwidths, and the plurality of first BWPs comprise at least two second BWPs with a same SCS.

**17.** The method according to claim 16, wherein the method further comprises:
determining a fourth channel bandwidth when a frequency domain resource range of the first BWP exceeds a frequency domain range of a first channel bandwidth corresponding to the first BWP, wherein a frequency domain resource range of the fourth channel bandwidth comprises the frequency domain resource range of the first BWP.

**18.** The method according to claim 17, wherein the fourth channel bandwidth meets one or more of the following conditions:

a frequency domain resource starting location of the fourth channel bandwidth is the same as a frequency domain resource starting location of the first BWP;
an SCS of the fourth channel bandwidth is the same as an SCS of the first BWP;
a size of the fourth channel bandwidth is the same as a size of the first channel bandwidth corresponding to the first BWP; or
a relative location of the first BWP and the fourth channel bandwidth is the same as a relative location of a fourth BWP and the first channel bandwidth corresponding to the first BWP, wherein an SCS of the fourth BWP is the same as an SCS of the first BWP.

**19.** The method according to any one of claims 12 to 18, wherein the method further comprises:
sending indication information to the terminal device, wherein the indication information indicates that a second BWP of the at least two first BWPs with a same SCS is in a valid state.

20. The method according to any one of claims 12 to 19, wherein the method further comprises:

sending control information to the terminal device, wherein the control information indicates a fifth BWP activated at a first moment; and

when the fifth BWP is associated with a sixth BWP, a switching delay of switching from the sixth BWP to the fifth BWP is a first switching delay, the sixth BWP is a BWP activated at a second moment, and the second moment is before the first moment; or

when the fifth BWP is not associated with a sixth BWP, a switching delay of switching from the sixth BWP to the fifth BWP is a second switching delay, wherein

the first switching delay is less than the second switching delay, and the fifth BWP is different from the sixth BWP.

21. The method according to claim 20, wherein when the fifth BWP is associated with the sixth BWP, the fifth BWP and the sixth BWP meet one or more of the following conditions:

a bandwidth of the fifth BWP is the same as a bandwidth of the sixth BWP;

an SCS of the fifth BWP is the same as an SCS of the sixth BWP;

a physical transmission channel configuration of the fifth BWP is the same as a physical transmission channel configuration of the sixth BWP;

a physical signal configuration of the fifth BWP is the same as a physical signal configuration of the sixth BWP;

a relative location of the fifth BWP in a first channel bandwidth corresponding to the fifth BWP is the same as a relative location of the sixth BWP in a first channel bandwidth corresponding to the sixth BWP; or

an identifier of the fifth BWP is the same as an identifier of the sixth BWP, and a sub-identifier of the identifier corresponding to the fifth BWP is different from a sub-identifier of the identifier corresponding to the sixth BWP.

22. The method according to claim 20 or 21, wherein when the fifth BWP is associated with the sixth BWP, the at least two second BWPs with the same SCS comprise the fifth BWP and the sixth BWP.

23. A communication apparatus, comprising a module configured to perform the method according to any one of claims 1 to 11; or comprising a module configured to perform the method according to any one of claims 12 to 22.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 or claims 12 to 22 through a logic circuit or by executing code instructions.

25. A computer-readable storage medium, wherein the storage medium stores a computer program or instructions; and when the computer program or the instructions are executed by a communication apparatus, the method according to any one of claims 1 to 11 or claims 12-22 is implemented.

FIG. 1

FIG. 2

Terminal device

Network device

301: First configuration information, used to configure a
plurality of first channel bandwidths including at least two
second channel bandwidths with a same SCS

302: Second configuration information, used to configure
a plurality of first BWPs including at least two second
BWPs with a same SCS

FIG. 3

```
SCS-SpecificCarrier ::=        SEQUENCE {
    offsetToCarrier                INTEGER (0..2199),
    subcarrierSpacing              SubcarrierSpacing,
    carrierBandwidth               INTEGER (1..maxNrofPhysicalResourceBlocks),
    ...,
    [[
    txDirectCurrentLocation        INTEGER (0..4095)                OPTIONAL        -- Need S
    ]]
}
```

FIG. 4

Terminal device

Network device

501: Third configuration information, used to configure a
plurality of first channel bandwidths, and an SCS of each of
the plurality of first channel bandwidths is different

502: Fourth configuration information, used to configure
a plurality of first BWPs including at least two second
BWPs with a same SCS

FIG. 5

First channel bandwidth, SCS 1

Fifth BWP, SCS 1

First channel bandwidth, SCS 2

Fifth BWP, SCS 2

FIG. 6a

First channel bandwidth
corresponding to a fifth BWP

Fifth BWP
BWP #0, location #0

First channel bandwidth
corresponding to a sixth BWP

Sixth BWP
BWP #0, location #1

FIG. 6b

Communication apparatus 700

701                                              702

| Transmission module | — | Processing module |

FIG. 7

Communication apparatus 800

| Processor 810 | | Interface circuit 820 |

Memory 830

FIG. 8

## INTERNATIONAL SEARCH REPORT

International application No.

**PCT/CN2022/105195**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: subcarrierspacing, SCS, 载波带宽, handover, 带宽部分, switch, 信道带宽, 切换, 子载波间隔, spacing, same, BWP, 相同, subcarrier, SCS-specificcarrier, 一样, offsettocarrier, 相等

### C. DOCUMENTS CONSIDERED TO BE RELEVANT

| Category* | Citation of document, with indication, where appropriate, of the relevant passages | Relevant to claim No. |
|---|---|---|
| X | WO 2020087470 A1 (OPPO GUANGDONG MOBILE TELECOMMUNICATIONS CO., LTD.) 07 May 2020 (2020-05-07)<br>description, page 4, line 18 to page 15, line 6 | 1-25 |
| A | WO 2021026926 A1 (HUAWEI TECHNOLOGIES CO., LTD.) 18 February 2021 (2021-02-18)<br>entire document | 1-25 |
| A | CN 112997564 A (BEIJING XIAOMI MOBILE SOFTWARE CO., LTD.) 18 June 2021 (2021-06-18)<br>entire document | 1-25 |
| A | FUJITSU et al. "Correction on description of subCarrierSpacing in BWP"<br>*R2-2106723, 3GPP TSG-RAN WG2 Meeting #114 electronic*, 27 May 2021 (2021-05-27),<br>entire document | 1-25 |
| A | QUALCOMM INC. "RRM issues in BWP switching"<br>*R4-1807861, 3GPP RAN4#87*, 25 May 2018 (2018-05-25),<br>entire document | 1-25 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/105195** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020296725 A1 (GUANGDONG OPPO MOBILE TELECOMMUNICATIONS CORP., LTD.) 17 September 2020 (2020-09-17) entire document | 1-25 |

Form PCT/ISA/210 (second sheet) (January 2015)

International application No.

**PCT/CN2022/105195**

| Patent document cited in search report | | | Publication date (day/month/year) | Patent family member(s) | | | Publication date (day/month/year) |
|---|---|---|---|---|---|---|---|
| WO | 2020087470 | A1 | 07 May 2020 | CN | 112740788 | A | 30 April 2021 |
| WO | 2021026926 | A1 | 18 February 2021 | CN | 114342500 | A | 12 April 2022 |
| CN | 112997564 | A | 18 June 2021 | None | | | |
| US | 2020296725 | A1 | 17 September 2020 | KR | 20220072881 | A | 02 June 2022 |
| | | | | TW | 201904336 | A | 16 January 2019 |
| | | | | CA | 3066295 | A1 | 20 December 2018 |
| | | | | US | 2022150897 | A1 | 12 May 2022 |
| | | | | KR | 20200013681 | A | 07 February 2020 |
| | | | | US | 2020413406 | A1 | 31 December 2020 |
| | | | | BR | 112019025153 | A2 | 16 June 2020 |
| | | | | MX | 2019014728 | A | 07 February 2020 |
| | | | | AU | 2017418863 | A1 | 16 January 2020 |
| | | | | RU | 2734024 | C1 | 12 October 2020 |
| | | | | WO | 2018227371 | A1 | 20 December 2018 |
| | | | | PH | 12019502680 | A1 | 08 June 2020 |
| | | | | IL | 271177 | A | 30 January 2020 |
| | | | | JP | 2020528228 | A | 17 September 2020 |
| | | | | CN | 110612761 | A | 24 December 2019 |
| | | | | EP | 3624521 | A1 | 18 March 2020 |
| | | | | SG | 11201911835 W | A | 30 January 2020 |
| | | | | CN | 111031579 | A | 17 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110839775